# EUROPÄISCHE PATENTANMELDUNG

(11) **EP 1 905 776 A1**
(43) Veröffentlichungstag der Anmeldung: **02.04.2008**
(21) Anmeldenummer: 07018246.4
(22) Anmeldetag: 18.09.2007
(51) Int. Cl.: C07F 9/30, C08K 5/5313, C09K 21/14

(54) **Unsymmetrisch substituierte Phosphinsäuren**

(30) Priorität: 28.09.2006 DE 102006045814
(71) Anmelder: Clariant International Ltd., 4132 Muttenz (CH)
(72) Erfinder: Bauer, Harald, Dr., 50170 Kerpen (DE); Hill, Michael, Dr., 50827 Köln (DE); Krause, Werner, Dr., 50354 Hürth (DE)
(74) Vertreter: Hütter, Klaus

(57) **Zusammenfassung**

Die Erfindung betrifft unsymmetrisch substituierte Phosphinsäuren der Formel (I)

R₁R₂C(OH)-P(=O)(OX)-C(OH)R₃R₄ (I)

worin
X Wasserstoff
R₁, R₂, R₃, R₄ gleich oder verschieden sind und Wasserstoff, Alkyl, Alkenyl, Alkinyl, Aralkyl, Aryl undloderalkaryl bedeuten,
mit der Maßgabe, dass die Gruppen R₁R₂C(OH)- und -C(OH)R₃R₄ jeweils immer verschieden sind, ein Verfahren zu ihrer Herstellung und ihre Verwendung.

## Beschreibung

Die Erfindung bezieht sich auf unsymmetrisch substituierte Phosphinsäuren, ein Verfahren zu deren Herstellung und ihre Verwendung.

Unsymmetrisch substituierte Phosphinsäuren, die etwa der Formel (I)

R₁R₂C(OH)-P(=O)(OX)-C(OH)R₃R₄ (I)

entsprechen, sind nach dem bisher bekannten Stand der Technik nicht oder nur sehr schwer zugänglich.

Nach dem Stand der Technik gelingt die Herstellung von solchen Produkten nur sehr unzureichend. Möglich ist eine Anbindung von Aldehyd an das sog. Wang-Harz, Phosphinylierung und anschließende P-Alkylierung, gefolgt von der Abspaltung der gewünschten Produkte von dem Wang-Harz (Cox. Tetrahedron Letters, 42(1), (2001) 125-128).

Es ist somit Aufgabe der vorliegenden Erfindung, überhaupt unsymmetrisch substituierte Phosphinsäuren zur Verfügung zu stellen. Gelöst wird die Aufgabe durch unsymmetrisch substituierte Phosphinsäuren, die in 1- und 1 '-Stellung unterschiedliche organische Substituenten tragen.

Die Erfindung betrifft daher unsymmetrisch substituierte Phosphinsäuren der Formel (I)

R₁R₂C(OH)-P(=O)(OX)-C(OH)R₃R₄ (I)

worin
X Wasserstoff
R₁, R₂, R₃, R₄ gleich oder verschieden sind und Wasserstoff, Alkyl, Alkenyl, Alkinyl, Aralkyl, Aryl und/oder Alkaryl bedeuten,
mit der Maßgabe, dass die Gruppen R₁R₂C(OH)- und -C(OH)R₃R₄ jeweils immer verschieden sind.

Bevorzugt tragen R₁, R₂, R₃, und/oder R₄ Heteroatome und/oder sind mit einer funktionellen Gruppe substituiert.

Bevorzugt handelt es sich bei den funktionellen Gruppen um Carbonyl-, Aldehyd-, Carboxy-, Hydroxy-, Sulfonsäure-, Nitril-, Cyano- und/oder Epoxygruppen; um primäre, sekundäre und/oder tertiäre Aminogruppen und/oder um un-, teil- oder vollsubstituierte Triazine.

Bevorzugt handelt es sich bei den Alkylgruppen um Methyl, Ethyl, n-Propyl, i-Propyl, n-Butyl, sec.-Butyl, tert.-Butyl, n-Octyl und/oder um Ethylhexyl.

Bevorzugt handelt es sich bei den Carboxygruppen um Carboxyalkylgruppen des Typs (CH₂)ₙCO₂H mit n=1 bis 6.

Bevorzugt handelt es sich bei den Hydroxygruppen um Hydroxyalkylgruppen des Typs (CH₂)ₙOH mit n = 1 bis 6.

Es ist weiterhin Aufgabe der vorliegenden Erfindung ein Verfahren zur Herstellung von unsymmetrisch substituierten Phosphinsäuren der Formel (I) zur Verfügung zu stellen.

Diese Aufgabe wird gelöst durch Reaktion einer Phosphorquelle gleichzeitig oder nacheinander mit Ketonen und/oder Aldehyden, die die geeigneten Substituenten tragen.

Die Erfindung betrifft daher auch ein Verfahren zur Herstellung von unsymmetrisch substituierten Phosphinsäuren, dadurch gekennzeichnet, dass eine Phosphorquelle gleichzeitig oder nacheinander mit einem Reaktionspartner A und einem Reaktionspartner B zu einem Additionsprodukt umgesetzt wird.

Bevorzugt handelt es sich bei der Phosphorquelle um ein Salz der Hypophosphorige Säure, um Hypophosphorige Säure, um Ester der Hypophosphorigen Säure oder um Mischungen davon.

Bevorzugt handelt es sich bei dem Salz der Hypophosphorige Säure um Alkalihypophosphit, Erdalkalihypophosphit, ein Hypophosphit der Elemente der dritten Hauptgruppe, Ammoniumhypophosphit, primäres, sekundäres, tertiäres, quarternäres Alkyl-, Aryl-Ammoniumhypophosphit, Triethylammoniumhypophosphit, Trimethylsilylammoniumhypophosphit und/oder N-Ethylpiperidinhypophosphit.

Bevorzugt handelt es sich bei dem Reaktionspartner A um ein Keton des Typs R₁R₂C=O oder ein Aldehyd des Typs R₁CHO und/oder des Typs R₂CHO und bei dem Reaktionspartner B um ein Keton des Typs R₃R₄C=O oder ein Aldehyd des Typs R₃CHO und/oder des Typs R₄CHO.

Bevorzugt ist das mol-Verhältnis von Reaktionspartner A bzw. Reaktionspartner B jeweils zur Phosphorquelle 0,5 zu 1 bis 10 zu 1, insbesondere 1 zu 1 bis 5 zu 1.

Gegenstand der Erfindung ist weiterhin die Verwendung der erfindungsgemäßen unsymmetrisch substituierten Phosphinsäuren in Flammschutzmittein.

Die Erfindung betrifft daher besonders die Verwendung von unsymmetrisch substituierte Phosphinsäuren nach mindestens einem der Ansprüche 1 bis 6 als Flammschutzmittel, insbesondere in Klarlacken und Intumeszenzbeschichtungen, Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern sowie zum flammhemmend Ausrüsten von Polyester und Cellulose-Rein- und Mischgeweben durch Impregnierung.

Die Erfindung betrifft auch eine flammgeschützte thermoplastische Polymerformmasse enthaltend 0,5 bis 45 Gew.-% unsymmetrisch substituierte Phosphinsäuren nach mindestens einem der Ansprüche 1 bis 6 und 0,5 bis 99,5 Gew.-% thermoplastisches Polymer oder Mischungen derselben, wobei die Summe der Komponenten 100 Gew.-% beträgt.

Die Erfindung betrifft auch eine flammgeschützte duroplastische Masse, enthaltend 0,1 bis 45 Gew. -% unsymmetrisch substituierte Phosphinsäuren nach mindestens einem der Ansprüche 1 bis 6, 40 bis 89,9 Gew. -% ungesättigtes Polyester und 10 bis 60 Gew. -% Vinylmonomer.

Die Erfindung betrifft schließlich auch eine flammwidrig ausgerüstetes Epoxidharz, enthaltend 0,5 bis 50 Gew.-% unsymmetrisch substituierte Phosphinsäuren nach mindestens einem der Ansprüche 1 bis 6, 5 bis 99,5 Gew.-% eines Epoxidharzes und 0 bis 20 Gew.-% eines Härters.

In den erfindungsgemäßen unsymmetrisch substituierten Phosphinsäuren sind die Gruppen R₁R₂C(OH)- und -C(OH)R₃R₄ immer verschieden. Entsprechend gilt dies auch für die Komponenten A und B.

Wenn R₁, R₂, R₃, R₄ für Alkyl, Alkenyl, Alkinyl, Aralkyl, Aryl oder Alkaryl stehen, so können diese Gruppen gegebenenfalls linear, verzweigt oder cyclisch sein oder auch Teil eines Ringsystems sein.

Geeignet ist auch substituiertes Phenyl, bevorzugt mono-, bis- und/oder tri-substituiertes Hydroxy-, Amino-, N-Alkylamino- oder N,N-Dialkylaminophenyl.

Erfindungsgemäße Verbindungen sind die folgenden unsymmetrisch substituierten Phosphinsäuren:
(H)(H)C(OH)-P(=O)(OH)-C(OH)(H)(Alkyl),
(H)(H)C(OH)-P(=O)(OH)-C(OH)(H)(Aryl),
(H)(H)C(OH)-P(=O)(OH)-C(OH)(H)(Carboxyalkyl),
(H)(H)C(OH)-P(=O)(OH)-C(OH)(Alkyl)(Alkyl),
(H)(H)C(OH)-P(=O)(OH)-C(OH)(Aryl)(Alkyl),
(H)(H)C(OH)-P(=O)(OH)-C(OH)(Carboxyalkyl)(Alkyl),
(H)(H)C(OH)-P(=O)(OH)-C(OH)(Aryl)(Aryl),
(H)(H)C(OH)-P(=O)(OH)-C(OH)(Aryl)(Carboxyalkyl),
(H)(H)C(OH)-P(=O)(OH)-C(OH)(Carboxyalkyl)(Carboxyalkyl),
(H)(Aryl)C(OH)-P(=O)(OH)-C(OH)(H)(Alkyl),
(H)(Carboxyalkyl)C(OH)-P(=O)(OH)-C(OH)(H)(Alkyl),
(H)(Alkyl)C(OH)-P(=O)(OH)-C(OH)(H)(Aryl),
(H)(Alkyl)C(OH)-P(=O)(OH)-C(OH)(H)(Carboxyalkyl),
(H)(Aryl)C(OH)-P(=O)(OH)-C(OH)(H)(Carboxyalkyl),
(H)(H)C(OH)-P(=O)(OH)-C(OH)(Alkyl)(Alkyl),
(H)(Alkyl)C(OH)-P(=O)(OH)-C(OH)(Alkyl)(Alkyl),
(H)(Aryl)C(OH)-P(=O)(OH)-C(OH)(Alkyl)(Alkyl),
(H)(Carboxyalkyl)C(OH)-P(=O)(OH)-C(OH)(Alkyl)(Alkyl),
(H)(H)C(OH)-P(=O)(OH)-C(OH)(Aryl)(Alkyl),
(H)(Alkyl)C(OH)-P(=O)(OH)-C(OH)(Aryl)(Alkyl),
(H)(Aryl)C(OH)-P(=O)(OH)-C(OH)(Aryl)(Alkyl),
(H)(Carboxyalkyl)C(OH)-P(=O)(OH)-C(OH)(Aryl)(Alkyl),
(H)(H)C(OH)-P(=O)(OH)-C(OH)(Carboxyalkyl)(Alkyl),
(H)(Alkyl)C(OH)-P(=O)(OH)-C(OH)(Carboxyalkyl)(Alkyl),
(H)(Aryl)C(OH)-P(=O)(OH)-C(OH)(Carboxyalkyl)(Alkyl),
(H)(Carboxyalkyl)C(OH)-P(=O)(OH)-C(OH)(Carboxyalkyl)(Alkyl),
(H)(H)C(OH)-P(=O)(OH)-C(OH)(Aryl)(Aryl),
(H)(Alkyl)C(OH)-P(=O)(OH)-C(OH)(Aryl)(Aryl),
(H)(Aryl)C(OH)-P(=O)(OH)-C(OH)(Aryl)(Aryl),
(H)(Carboxyalkyl)C(OH)-P(=O)(OH)-C(OH)(Aryl)(Aryl),
(H)(H)C(OH)-P(=O)(OH)-C(OH)(Aryl)(Carboxyalkyl),
(H)(Alkyl)C(OH)-P(=O)(OH)-C(OH)(Aryl)(Carboxyalkyl),
(H)(Aryl)C(OH)-P(=O)(OH)-C(OH)(Aryl)(Carboxyalkyl),
(H)(Carboxyalkyl)C(OH)-P(=O)(OH)-C(OH)(Aryl)(Carboxyalkyl),
(H)(H)C(OH)-P(=O)(OH)-C(OH)(Carboxyalkyl)(Carboxyalkyl),
(H)(Alkyl)C(OH)-P(=O)(OH)-C(OH)(Carboxyalkyl)(Carboxyalkyl),
(H)(Aryl)C(OH)-P(=O)(OH)-C(OH)(Carboxyalkyl)(Carboxyalkyl),
(H)(Carboxyalkyl)C(OH)-P(=O)(OH)-C(OH)(Carboxyalkyl)(Carboxyalkyl),
(Aryl)(Alkyl)C(OH)-P(=O)(OH)-C(OH)(Alkyl)(Alkyl),
(Carboxyalkyl)(Alkyl)C(OH)-P(=O)(OH)-C(OH)(Alkyl)(Alkyl),
(Alkyl)(Aryl)C(OH)-P(=O)(OH)-C(OH)(Alkyl)(Alkyl),
(Aryl)(Aryl)C(OH)-P(=O)(OH)-C(OH)(Alkyl)(Alkyl),
(Carboxyalkyl)(Aryl)C(OH)-P(=O)(OH)-C(OH)(Alkyl)(Alkyl),
(Alkyl)(Carboxyalkyl)C(OH)-P(=O)(OH)-C(OH)(Alkyl)(Alkyl),
(Aryl)(Carboxyalkyl)C(OH)-P(=O)(OH)-C(OH)(Alkyl)(Alkyl),
(Carboxyalkyl)(Carboxyalkyl)C(OH)-P(=O)(OH)-C(OH)(Alkyl)(Alkyl),
(Alkyl)(H)C(OH)-P(=O)(OH)-C(OH)(Aryl)(Alkyl),
(Aryl)(H)C(OH)-P(=O)(OH)-C(OH)(Aryl)(Alkyl),
(Carboxyalkyl)(H)C(OH)-P(=O)(OH)-C(OH)(Aryl)(Alkyl),
(Alkyl)(Alkyl)C(OH)-P(=O)(OH)-C(OH)(Aryl)(Alkyl),
(Carboxyalkyl)(Alkyl)C(OH)-P(=O)(OH)-C(OH)(Aryl)(Alkyl),
(Aryl)(Aryl)C(OH)-P(=O)(OH)-C(OH)(Aryl)(Alkyl),
(Alkyl)(Carboxyalkyl)C(OH)-P(=O)(OH)-C(OH)(Aryl)(Alkyl),
(Aryl)(Carboxyalkyl)C(OH)-P(=O)(OH)-C(OH)(Aryl)(Alkyl),
(Carboxyalkyl)(Carboxyalkyl)C(OH)-P(=O)(OH)-C(OH)(Aryl)(Alkyl),
(Alkyl)(H)C(OH)-P(=O)(OH)-C(OH)(Carboxyalkyl)(Alkyl),
(Aryl)(H)C(OH)-P(=O)(OH)-C(OH)(Carboxyalkyl)(Alkyl),
(Carboxyalkyl)(H)C(OH)-P(=O)(OH)-C(OH)(Carboxyalkyl)(Alkyl),
(Aryl)(Aryl)C(OH)-P(=O)(OH)-C(OH)(Carboxyalkyl)(Alkyl),
(Aryl)(Carboxyalkyl)C(OH)-P(=O)(OH)-C(OH)(Carboxyalkyl)(Alkyl),
(Carboxyalkyl)(Carboxyalkyl)C(OH)-P(=O)(OH)-C(OH)(Carboxyalkyl)(Alkyl),
(Alkyl)(H)C(OH)-P(=O)(OH)-C(OH)(Aryl)(Aryl),
(Aryl)(H)C(OH)-P(=O)(OH)-C(OH)(Aryl)(Aryl),
(Carboxyalkyl)(H)C(OH)-P(=O)(OH)-C(OH)(Aryl)(Aryl),
(Aryl)(Alkyl)C(OH)-P(=O)(OH)-C(OH)(Aryl)(Aryl),
(Carboxyalkyl)(Aryl)C(OH)-P(=O)(OH)-C(OH)(Aryl)(Aryl),
(Alkyl)(Carboxyalkyl)C(OH)-P(=O)(OH)-C(OH)(Aryl)(Aryl),
(Aryl)(Carboxyalkyl)C(OH)-P(=O)(OH)-C(OH)(Aryl)(Aryl),
(Carboxyalkyl)(Carboxyalkyl)C(OH)-P(=O)(OH)-C(OH)(Aryl)(Aryl),
(Alkyl)(H)C(OH)-P(=O)(OH)-C(OH)(Aryl)(Carboxyalkyl),
(Aryl)(H)C(OH)-P(=O)(OH)-C(OH)(Aryl)(Carboxyalkyl),
(Carboxyalkyl)(H)C(OH)-P(=O)(OH)-C(OH)(Aryl)(Carboxyalkyl),
(Aryl)(Alkyl)C(OH)-P(=O)(OH)-C(OH)(Aryl)(Carboxyalkyl),
(Carboxyalkyl)(Alkyl)C(OH)-P(=O)(OH)-C(OH)(Aryl)(Carboxyalkyl),
(Carboxyalkyl)(Carboxyalkyl)C(OH)-P(=O)(OH)-C(OH)(Aryl)(Carboxyalkyl),
(Alkyl)(H)C(OH)-P(=O)(OH)-C(OH)(Carboxyalkyl)(Carboxyalkyl),
(Aryl)(H)C(OH)-P(=O)(OH)-C(OH)(Carboxyalkyl)(Carboxyalkyl),
(Carboxyalkyl)(H)C(OH)-P(=O)(OH)-C(OH)(Carboxyalkyl)(Carboxyalkyl),
(Alkyl)(Alkyl)C(OH)-P(=O)(OH)-C(OH)(Carboxyalkyl)(Carboxyalkyl),
(Aryl)(Alkyl)C(OH)-P(=O)(OH)-C(OH)(Carboxyalkyl)(Carboxyalkyl),
(Carboxyalkyl)(Alkyl)C(OH)-P(=O)(OH)-C(OH)(Carboxyalkyl)(Carboxyalkyl),
(Alkyl)(Aryl)C(OH)-P(=O)(OH)-C(OH)(Carboxyalkyl)(Carboxyalkyl),
(Aryl)(Aryl)C(OH)-P(=O)(OH)-C(OH)(Carboxyalkyl)(Carboxyalkyl),
(Carboxyalkyl)(Aryl)C(OH)-P(=O)(OH)-C(OH)(Carboxyalkyl)(Carboxyalkyl),
(Alkyl)(Carboxyalkyl)C(OH)-P(=O)(OH)-C(OH)(Carboxyalkyl)(Carboxyalkyl),
(Aryl)(Carboxyalkyl)C(OH)-P(=O)(OH)-C(OH)(Carboxyalkyl)(Carboxyalkyl),
(Carboxyalkyl)(Carboxyalkyl)C(OH)-P(=O)(OH)-C(OH)(Carboxyalkyl)(Carboxyalkyl).

Erfindungsgemäße Verbindungen sind auch die folgenden unsymmetrisch substituierten Phosphinsäuren:
(H)(H)C(OH)-P(=O)(OH)-C(OH)(H)(cyclo-Alkyl),
(H)(H)C(OH)-P(=O)(OH)-C(OH)(cyclo-Alkyl)(cyclo-Alkyl),
(H)(H)C(OH)-P(=O)(OH)-C(OH)(Aryl)(cyclo-Alkyl),
(H)(H)C(OH)-P(=O)(OH)-C(OH)(Carboxyalkyl)(cyclo-Alkyl),
(H)(Aryl)C(OH)-P(=O)(OH)-C(OH)(H)(cyclo-Alkyl),
(H)(Carboxyalkyl)C(OH)-P(=O)(OH)-C(OH)(H)(cyclo-Alkyl),
(H)(cyclo-Alkyl)C(OH)-P(=O)(OH)-C(OH)(H)(Aryl),
(H)(cyclo-Alkyl)C(OH)-P(=O)(OH)-C(OH)(H)(Carboxyalkyl),
(H)(H)C(OH)-P(=O)(OH)-C(OH)(cyclo-Alkyl)(cyclo-Alkyl),
(H)(cyclo-Alkyl)C(OH)-P(=O)(OH)-C(OH)(cyclo-Alkyl)(cyclo-Alkyl),
(H)(Aryl)C(OH)-P(=O)(OH)-C(OH)(cyclo-Alkyl)(cyclo-Alkyl),
(H)(Carboxyalkyl)C(OH)-P(=O)(OH)-C(OH)(cyclo-Alkyl)(cyclo-Alkyl),
(H)(H)C(OH)-P(=O)(OH)-C(OH)(Aryl)(cyclo-Alkyl),
(H)(cyclo-Alkyl)C(OH)-P(=O)(OH)-C(OH)(Aryl)(cyclo-Alkyl),
(H)(Aryl)C(OH)-P(=O)(OH)-C(OH)(Aryl)(cyclo-Alkyl),
(H)(Carboxyalkyl)C(OH)-P(=O)(OH)-C(OH)(Aryl)(cyclo-Alkyl),
(H)(H)C(OH)-P(=O)(OH)-C(OH)(Carboxyalkyl)(cyclo-Alkyl),
(H)(cyclo-Alkyl)C(OH)-P(=O)(OH)-C(OH)(Carboxyalkyl)(cyclo-Alkyl),
(H)(Aryl)C(OH)-P(=O)(OH)-C(OH)(Carboxyalkyl)(cyclo-Alkyl),
(H)(Carboxyalkyl)C(OH)-P(=O)(OH)-C(OH)(Carboxyalkyl)(cyclo-Alkyl),
(H)(cyclo-Alkyl)C(OH)-P(=O)(OH)-C(OH)(Aryl)(Aryl),
(H)(cyclo-Alkyl)C(OH)-P(=O)(OH)-C(OH)(Aryl)(Carboxyalkyl),
(H)(cyclo-Alkyl)C(OH)-P(=O)(OH)-C(OH)(Carboxyalkyl)(Carboxyalkyl),
(Aryl)(cyclo-Alkyl)C(OH)-P(=O)(OH)-C(OH)(cyclo-Alkyl)(cyclo-Alkyl),
(Carboxyalkyl)(cyclo-Alkyl)C(OH)-P(=O)(OH)-C(OH)(cyclo-Alkyl)(cyclo-Alkyl),
(cyclo-Alkyl)(Aryl)C(OH)-P(=O)(OH)-C(OH)(cyclo-Alkyl)(cyclo-Alkyl),
(Aryl)(Aryl)C(OH)-P(=O)(OH)-C(OH)(cyclo-Alkyl)(cyclo-Alkyl),
(Carboxyalkyl)(Aryl)C(OH)-P(=O)(OH)-C(OH)(cyclo-Alkyl)(cyclo-Alkyl),
(cyclo-Alkyl)(Carboxyalkyl)C(OH)-P(=O)(OH)-C(OH)(cyclo-Alkyl)(cyclo-Alkyl),
(Aryl)(Carboxyalkyl)C(OH)-P(=O)(OH)-C(OH)(cyclo-Alkyl)(cyclo-Alkyl),
(Carboxyalkyl)(Carboxyalkyl)C(OH)-P(=O)(OH)-C(OH)(cyclo-Alkyl)(cyclo-Alkyl),
(cyclo-Alkyl)(H)C(OH)-P(=O)(OH)-C(OH)(Aryl)(cyclo-Alkyl),
(Aryl)(H)C(OH)-P(=O)(OH)-C(OH)(Aryl)(cyclo-Alkyl),
(Carboxyalkyl)(H)C(OH)-P(=O)(OH)-C(OH)(Aryl)(cyclo-Alkyl),
(cyclo-Alkyl)(cyclo-Alkyl)C(OH)-P(=O)(OH)-C(OH)(Aryl)(cyclo-Alkyl),
(Carboxyalkyl)(cyclo-Alkyl)C(OH)-P(=O)(OH)-C(OH)(Aryl)(cyclo-Alkyl),
(Aryl)(Aryl)C(OH)-P(=O)(OH)-C(OH)(Aryl)(cyclo-Alkyl),
(cyclo-Alkyl)(Carboxyalkyl)C(OH)-P(=O)(OH)-C(OH)(Aryl)(cyclo-Alkyl),
(Aryl)(Carboxyalkyl)C(OH)-P(=O)(OH)-C(OH)(Aryl)(cyclo-Alkyl),
(Carboxyalkyl)(Carboxyalkyl)C(OH)-P(=O)(OH)-C(OH)(Aryl)(cyclo-Alkyl),
(cyclo-Alkyl)(H)C(OH)-P(=O)(OH)-C(OH)(Carboxyalkyl)(cyclo-Alkyl),
(Aryl)(H)C(OH)-P(=O)(OH)-C(OH)(Carbooyalkyl)(cyclo-Alkyl),
(Carbooyalkyl)(H)C(OH)-P(=O)(OH)-C(OH)(Carboxyalkyl)(cyclo-Alkyl),
(Aryl)(Aryl)C(OH)-P(=O)(OH)-C(OH)(Carboxyalkyl)(cyclo-Alkyl),
(Aryl)(Carboxyalkyl)C(OH)-P(=O)(OH)-C(OH)(Carboxyalkyl)(cyclo-Alkyl),
(Carboxyalkyl)(Carboxyalkyl)C(OH)-P(=O)(OH)-C(OH)(Carboxyalkyl)(cyclo-Alkyl),
(cyclo-Alkyl)(H)C(OH)-P(=O)(OH)-C(OH)(Aryl)(Aryl),
(Aryl)(cyclo-Alkyl)C(OH)-P(=O)(OH)-C(OH)(Aryl)(Aryl),
(cyclo-Alkyl)(Carboxyalkyl)C(OH)-P(=O)(OH)-C(OH)(Aryl)(Aryl),
(cyclo-Alkyl)(H)C(OH)-P(=O)(OH)-C(OH)(Aryl)(Carboxyalkyl),
(Aryl)(cyclo-Alkyl)C(OH)-P(=O)(OH)-C(OH)(Aryl)(Carboxyalkyl),
(Carboxyalkyl)(cyclo-Alkyl)C(OH)-P(=O)(OH)-C(OH)(Aryl)(Carboxyalkyl),
(cyclo-Alkyl)(H)C(OH)-P(=O)(OH)-C(OH)(Carboxyalkyl)(Carboxyalkyl),
(cyclo-Alkyl)(cyclo-Alkyl)C(OH)-P(=O)(OH)-C(OH)(Carboxyalkyl)(Carboxyalkyl),
(Aryl)(cyclo-Alkyl)C(OH)-P(=O)(OH)-C(OH)(Carboxyalkyl)(Carboxyalkyl),
(Carboxyalkyl)(cyclo-Alkyl)C(OH)-P(=O)(OH)-C(OH)(Carboxyalkyl)(Carboxyalkyl),
(cyclo-Alkyl)(Aryl)C(OH)-P(=O)(OH)-C(OH)(Carboxyalkyl)(Carboxyalkyl),
(cyclo-Alkyl)(Carboxyalkyl)C(OH)-P(=O)(OH)-C(OH)(Carboxyalkyl)(Carboxyalkyl).

Erfindungsgemäße Verbindungen sind auch die folgenden unsymmetrisch substituierten Phosphinsäuren:
(H)(H)C(OH)-P(=O)(OH)-C(OH)(H)(Alkenyl),
(H)(H)C(OH)-P(=O)(OH)-C(OH)(Alkenyl)(Alkenyl),
(H)(H)C(OH)-P(=O)(OH)-C(OH)(Aryl)(Alkenyl),
(H)(H)C(OH)-P(=O)(OH)-C(OH)(Carboxyalkyl)(Alkenyl),
(H)(Aryl)C(OH)-P(=O)(OH)-C(OH)(H)(Alkenyl),
(H)(Carboxyalkyl)C(OH)-P(=O)(OH)-C(OH)(H)(Alkenyl),
(H)(Alkenyl)C(OH)-P(=O)(OH)-C(OH)(H)(Aryl),
(H)(Alkenyl)C(OH)-P(=O)(OH)-C(OH)(H)(Carboxyalkyl),
(H)(H)C(OH)-P(=O)(OH)-C(OH)(Alkenyl)(Alkenyl),
(H)(Alkenyl)C(OH)-P(=O)(OH)-C(OH)(Alkenyl)(Alkenyl),
(H)(Aryl)C(OH)-P(=O)(OH)-C(OH)(Alkenyl)(Alkenyl),
(H)(Carboxyalkyl)C(OH)-P(=O)(OH)-C(OH)(Alkenyl)(Alkenyl),
(H)(H)C(OH)-P(=O)(OH)-C(OH)(Aryl)(Alkenyl),
(H)(Alkenyl)C(OH)-P(=O)(OH)-C(OH)(Aryl)(Alkenyl),
(H)(Aryl)C(OH)-P(=O)(OH)-C(OH)(Aryl)(Alkenyl),
(H)(Carboxyalkyl)C(OH)-P(=O)(OH)-C(OH)(Aryl)(Alkenyl),
(H)(H)C(OH)-P(=O)(OH)-C(OH)(Carboxyalkyl)(Alkenyl),
(H)(Alkenyl)C(OH)-P(=O)(OH)-C(OH)(Carboxyalkyl)(Alkenyl),
(H)(Aryl)C(OH)-P(=O)(OH)-C(OH)(Carboxyalkyl)(Alkenyl),
(H)(Carboxyalkyl)C(OH)-P(=O)(OH)-C(OH)(Carboxyalkyl)(Alkenyl),
(H)(Alkenyl)C(OH)-P(=O)(OH)-C(OH)(Aryl)(Aryl),
(H)(Alkenyl)C(OH)-P(=O)(OH)-C(OH)(Aryl)(Carboxyalkyl),
(H)(Alkenyl)C(OH)-P(=O)(OH)-C(O H)(Carboxyalkyl)(Carboxyalkyl),
(Aryl)(Alkenyl)C(OH)-P(=O)(OH)-C(OH)(Alkenyl)(Alkenyl),
(Carboxyalkyl)(Alkenyl)C(OH)-P(=O)(OH)-C(OH)(Alkenyl)(Alkenyl),
(Alkenyl)(Aryl)C(OH)-P(=O)(OH)-C(OH)(Alkenyl)(Alkenyl),
(Aryl)(Aryl)C(OH)-P(=O)(OH)-C(OH)(Alkenyl)(Alkenyl),
(Carboxyalkyl)(Aryl)C(OH)-P(=O)(OH)-C(OH)(Alkenyl)(Alkenyl),
(Alkenyl)(Carboxyalkyl)C(OH)-P(=O)(OH)-C(OH)(Alkenyl)(Alkenyl),
(Aryl)(Carboxyalkyl)C(OH)-P(=O)(OH)-C(OH)(Alkenyl)(Alkenyl),
(Carboxyalkyl)(Carboxyalkyl)C(OH)-P(=O)(OH)-C(OH)(Alkenyl)(Alkenyl),
(Alkenyl)(H)C(OH)-P(=O)(OH)-C(OH)(Aryl)(Alkenyl),
(Aryl)(H)C(OH)-P(=O)(OH)-C(OH)(Aryl)(Alkenyl),
(Carboxyalkyl)(H)C(OH)-P(=O)(OH)-C(OH)(Aryl)(Alkenyl),
(Alkenyl)(Alkenyl)C(OH)-P(=O)(OH)-C(OH)(Aryl)(Alkenyl),
(Carboxyalkyl)(Alkenyl)C(OH)-P(=O)(OH)-C(OH)(Aryl)(Alkenyl),
(Aryl)(Aryl)C(OH)-P(=O)(OH)-C(OH)(Aryl)(Alkenyl),
(Alkenyl)(Carboxyalkyl)C(OH)-P(=O)(OH)-C(OH)(Aryl)(Alkenyl),
(Aryl)(Carboxyalkyl)C(OH)-P(=O)(OH)-C(OH)(Aryl)(Alkenyl),
(Carboxyalkyl)(Carboxyalkyl)C(OH)-P(=O)(OH)-C(OH)(Aryl)(Alkenyl),
(Alkenyl)(H)C(OH)-P(=O)(OH)-C(OH)(Carboxyalkyl)(Alkenyl),
(Aryl)(H)C(OH)-P(=O)(OH)-C(OH)(Carboxyalkyl)(Alkenyl),
(Carboxyalkyl)(H)C(OH)-P(=O)(OH)-C(OH)(Carboxyalkyl)(Alkenyl),
(Aryl)(Aryl)C(OH)-P(=O)(OH)-C(OH)(Carboxyalkyl)(Alkenyl),
(Aryl)(Carboxyalkyl)C(OH)-P(=O)(OH)-C(OH)(Carboxyalkyl)(Alkenyl),
(Carboxyalkyl)(Carboxyalkyl)C(OH)-P(=O)(OH)-C(OH)(Carboxyalkyl)(Alkenyl),
(Alkenyl)(H)C(OH)-P(=O)(OH)-C(OH)(Aryl)(Aryl),
(Aryl)(Alkenyl)C(OH)-P(=O)(OH)-C(OH)(Aryl)(Aryl),
(Alkenyl)(Carboxyalkyl)C(OH)-P(=O)(OH)-C(OH)(Aryl)(Aryl),
(Alkenyl)(H)C(OH)-P(=O)(OH)-C(OH)(Aryl)(Carboxyalkyl),
(Aryl)(Alkenyl)C(OH)-P(=O)(OH)-C(OH)(Aryl)(Carboxyalkyl),
(Carboxyalkyl)(Alkenyl)C(OH)-P(=O)(OH)-C(OH)(Aryl)(Carboxyalkyl),
(Alkenyl)(H)C(OH)-P(=O)(OH)-C(OH)(Carboxyalkyl)(Carboxyalkyl),
(Alkenyl)(Alkenyl)C(OH)-P(=O)(OH)-C(OH)(Carboxyalkyl)(Carboxyalkyl),
(Aryl)(Alkenyl)C(OH)-P(=O)(OH)-C(OH)(Carboxyalkyl)(Carboxyalkyl),
(Carboxyalkyl)(Alkenyl)C(OH)-P(=O)(OH)-C(OH)(Carboxyalkyl)(Carboxyalkyl),
(Alkenyl)(Aryl)C(OH)-P(=O)(OH)-C(OH)(Carboxyalkyl)(Carboxyalkyl),
(Alkenyl)(Carboxyalkyl)C(OH)-P(=O)(OH)-C(OH)(Carboxyalkyl)(Carboxyalkyl).

Erfindungsgemäße Verbindungen sind auch die folgenden unsymmetrisch substituierten Phosphinsäuren:
(H)(H)C(OH)-P(=O)(OH)-C(OH)(H)(Alkinyl),
(H)(H)C(OH)-P(=O)(OH)-C(OH)(Alkinyl)(Alkinyl),
(H)(H)C(OH)-P(=O)(OH)-C(OH)(Aryl)(Alkinyl),
(H)(H)C(OH)-P(=O)(OH)-C(OH)(Carboxyalkyl)(Alkinyl),
(H)(Aryl)C(OH)-P(=O)(OH)-C(OH)(H)(Alkinyl),
(H)(Carboxyalkyl)C(OH)-P(=O)(OH)-C(OH)(H)(Alkinyl),
(H)(Alkinyl)C(OH)-P(=O)(OH)-C(OH)(H)(Aryl),
(H)(Alkinyl)C(OH)-P(=O)(OH)-C(OH)(H)(Carboxyalkyl),
(H)(H)C(OH)-P(=O)(OH)-C(OH)(Alkinyl)(Alkinyl),
(H)(Alkinyl)C(OH)-P(=O)(OH)-C(OH)(Alkinyl)(Alkinyl),
(H)(Aryl)C(OH)-P(=O)(OH)-C(OH)(Alkinyl)(Alkinyl),
(H)(Carboxyalkyl)C(OH)-P(=O)(OH)-C(OH)(Alkinyl)(Alkinyl),
(H)(H)C(OH)-P(=O)(OH)-C(OH)(Aryl)(Alkinyl),
(H)(Alkinyl)C(OH)-P(=O)(OH)-C(OH)(Aryl)(Alkinyl),
(H)(Aryl)C(OH)-P(=O)(OH)-C(OH)(Aryl)(Alkinyl),
(H)(Carboxyalkyl)C(OH)-P(=O)(OH)-C(OH)(Aryl)(Alkinyl),
(H)(H)C(OH)-P(=O)(OH)-C(OH)(Carboxyalkyl)(Alklnyl),
(H)(Alkinyl)C(OH)-P(=O)(OH)-C(OH)(Carboxyalkyl)(Alkinyl),
(H)(Aryl)C(OH)-P(=O)(OH)-C(OH)(Carboxyalkyl)(Alkinyl),
(H)(Carboxyalkyl)C(OH)-P(=O)(OH)-C(OH)(Carboxyalkyl)(Alkinyl),
(H)(Alkinyl)C(OH)-P(=O)(OH)-C(OH)(Aryl)(Aryl),
(H)(Alkinyl)C(OH)-P(=O)(OH)-C(OH)(Aryl)(Carboxyalkyl),
(H)(Alkinyl)C(OH)-P(=O)(OH)-C(OH)(Carboxyalkyl)(Carboxyalkyl),
(Aryl)(Alkinyl)C(OH)-P(=O)(OH)-C(OH)(Alkinyl)(Alkinyl),
(Carboxyalkyl)(Alkinyl)C(OH)-P(=O)(OH)-C(OH)(Alkinyl)(Alkinyl),
(Alkinyl)(Aryl)C(OH)-P(=O)(OH)-C(OH)(Alkinyl)(Alkinyl),
(Aryl)(Aryl)C(OH)-P(=O)(OH)-C(OH)(Alkinyl)(Alkinyl),
(Carboxyalkyl)(Aryl)C(OH)-P(=O)(OH)-C(OH)(Alkinyl)(Alkinyl),
(Alkinyl)(Carboxyalkyl)C(OH)-P(=O)(OH)-C(OH)(Alkinyl)(Alkinyl),
(Aryl)(Carboxyalkyl)C(OH)-P(=O)(OH)-C(OH)(Alkinyl)(Alkinyl),
(Carboxyalkyl)(Carboxyalkyl)C(OH)-P(=O)(OH)-C(OH)(Alkinyl)(Alkinyl),
(Alkinyl)(H)C(OH)-P(=O)(OH)-C(OH)(Aryl)(Alkinyl),
(Aryl)(H)C(OH)-P(=O)(OH)-C(OH)(Aryl)(Alkinyl),
(Carboxyalkyl)(H)C(OH)-P(=O)(OH)-C(OH)(Aryl)(Alkinyl),
(Alkinyl)(Alkinyl)C(OH)-P(=O)(OH)-C(OH)(Aryl)(Alkinyl),
(Carboxyalkyl)(Alkinyl)C(OH)-P(=O)(OH)-C(OH)(Aryl)(Alkinyl),
(Aryl)(Aryl)C(OH)-P(=O)(OH)-C(OH)(Aryl)(Alkinyl),
(Alkinyl)(Carboxyalkyl)C(OH)-P(=O)(OH)-C(OH)(Aryl)(Alkinyl),
(Aryl)(Carboxyalkyl)C(OH)-P(=O)(OH)-C(OH)(Aryl)(Alkinyl),
(Carboxyalkyl)(Carboxyalkyl)C(OH)-P(=O)(OH)-C(OH)(Aryl)(Alkinyl),
(Alkinyl)(H)C(OH)-P(=O)(OH)-C(OH)(Carboxyalkyl)(Alkinyl),
(Aryl)(H)C(OH)-P(=O)(OH)-C(OH)(Carboxyalkyl)(Alkinyl),
(Carboxyalkyl)(H)C(OH)-P(=O)(OH)-C(OH)(Carboxyalkyl)(Alkinyl),
(Aryl)(Aryl)C(OH)-P(=O)(OH)-C(OH)(Carboxyalkyl)(Alkinyl),
(Aryl)(Carboxyalkyl)C(OH)-P(=O)(OH)-C(OH)(Carboxyalkyl)(Alkinyl),
(Carboxyalkyl)(Carboxyalkyl)C(OH)-P(=O)(OH)-C(OH)(Carboxyalkyl)(Alkinyl),
(Alkinyl)(H)C(OH)-P(=O)(OH)-C(OH)(Aryl)(Aryl),
(Aryl)(Alkinyl)C(OH)-P(=O)(OH)-C(OH)(Aryl)(Aryl),
(Alkinyl)(Carboxyalkyl)C(OH)-P(=O)(OH)-C(OH)(Aryl)(Aryl),
(Alkinyl)(H)C(OH)-P(=O)(OH)-C(OH)(Aryl)(Carboxyalkyl),
(Aryl)(Alkinyl)C(OH)-P(=O)(OH)-C(OH)(Aryl)(Carboxyalkyl),
(Carboxyalkyl)(Alkinyl)C(OH)-P(=O)(OH)-C(OH)(Aryl)(Carboxyalkyl),
(Alkinyl)(H)C(OH)-P(=O)(OH)-C(OH)(Carboxyalkyl)(Carboxyalkyl),
(Alkinyl)(Alkinyl)C(OH)-P(=O)(OH)-C(OH)(Carboxyalkyl)(Carboxyalkyl),
(Aryl)(Alkinyl)C(OH)-P(=O)(OH)-C(OH)(Carboxyalkyl)(Carboxyalkyl),
(Carboxyalkyl)(Alkinyl)C(OH)-P(=O)(OH)-C(OH)(Carboxyalkyl)(Carboxyalkyl),
(Alkinyl)(Aryl)C(OH)-P(=O)(OH)-C(OH)(Carboxyalkyl)(Carboxyalkyl),
(Alkinyl)(Carboxyalkyl)C(OH)-P(=O)(OH)-C(OH)(Carboxyalkyl)(Carboxyalkyl).

Erfindungsgemäße Verbindungen sind auch die folgenden unsymmetrisch substituierten Phosphinsäuren:
(H)(H)C(OH)-P(=O)(OH)-C(OH)(H)(Aralkyl),
(H)(H)C(OH)-P(=O)(OH)-C(OH)(Aralkyl)(Alkyl),
(H)(H)C(OH)-P(=O)(OH)-C(OH)(Aralkyl)(Aralkyl),
(H)(H)C(OH)-P(=O)(OH)-C(OH)(Aralkyl)(Carboxyalkyl),
(H)(Aralkyl)C(OH)-P(=O)(OH)-C(OH)(H)(Alkyl),
(H)(Alkyl)C(OH)-P(=O)(OH)-C(OH)(H)(Aralkyl),
(H)(Aralkyl)C(OH)-P(=O)(OH)-C(OH)(H)(Carboxyalkyl),
(H)(Aralkyl)C(OH)-P(=O)(OH)-C(OH)(Alkyl)(Alkyl),
(H)(H)C(OH)-P(=O)(OH)-C(OH)(Aralkyl)(Alkyl),
(H)(Alkyl)C(OH)-P(=O)(OH)-C(OH)(Aralkyl)(Alkyl),
(H)(Aralkyl)C(OH)-P(=O)(OH)-C(OH)(Aralkyl)(Alkyl),
(H)(Carboxyalkyl)C(OH)-P(=O)(OH)-C(OH)(Aralkyl)(Alkyl),
(H)(Aralkyl)C(OH)-P(=O)(OH)-C(OH)(Carboxyalkyl)(Alkyl),
(H)(H)C(OH)-P(=O)(OH)-C(OH)(Aralkyl)(Aralkyl),
(H)(Alkyl)C(OH)-P(=O)(OH)-C(OH)(Aralkyl)(Aralkyl),
(H)(Aralkyl)C(OH)-P(=O)(OH)-C(OH)(Aralkyl)(Aralkyl),
(H)(Carboxyalkyl)C(OH)-P(=O)(OH)-C(OH)(Aralkyl)(Aralkyl),
(H)(H)C(OH)-P(=O)(OH)-C(OH)(Aralkyl)(Carboxyalkyl),
(H)(Alkyl)C(OH)-P(=O)(OH)-C(OH)(Aralkyl)(Carboxyalkyl),
(H)(Aralkyl)C(OH)-P(=O)(OH)-C(OH)(Aralkyl)(Carboxyalkyl),
(H)(Carboxyalkyl)C(OH)-P(=O)(OH)-C(OH)(Aralkyl)(Carboxyalkyl),
(H)(Aralkyl)C(OH)-P(=O)(OH)-C(OH)(Carboxyalkyl)(Carboxyalkyl),
(Aralkyl)(Alkyl)C(OH)-P(=O)(OH)-C(OH)(Alkyl)(Alkyl),
(Alkyl)(Aralkyl)C(OH)-P(=O)(OH)-C(OH)(Alkyl)(Alkyl),
(Aralkyl)(Aralkyl)C(OH)-P(=O)(OH)-C(OH)(Alkyl)(Alkyl),
(Carboxyalkyl)(Aralkyl)C(OH)-P(=O)(OH)-C(OH)(Alkyl)(Alkyl),
(Aralkyl)(Carboxyalkyl)C(OH)-P(=O)(OH)-C(OH)(Alkyl)(Alkyl),
(Alkyl)(H)C(OH)-P(=O)(OH)-C(OH)(Aralkyl)(Alkyl),
(Aralkyl)(H)C(OH)-P(=O)(OH)-C(OH)(Aralkyl)(Alkyl),
(Carboxyalkyl)(H)C(OH)-P(=O)(OH)-C(OH)(Aralkyl)(Alkyl),
(Alkyl)(Alkyl)C(OH)-P(=O)(OH)-C(OH)(Aralkyl)(Alkyl),
(Carboxyalkyl)(Alkyl)C(OH)-P(=O)(OH)-C(OH)(Aralkyl)(Alkyl),
(Aralkyl)(Aralkyl)C(OH)-P(=O)(OH)-C(OH)(Aralkyl)(Alkyl),
(Alkyl)(Carboxyalkyl)C(OH)-P(=O)(OH)-C(OH)(Aralkyl)(Alkyl),
(Aralkyl)(Carboxyalkyl)C(OH)-P(=O)(OH)-C(OH)(Aralkyl)(Alkyl),
(Carboxyalkyl)(Carboxyalkyf)C(OH)-P(=O)(OH)-C(OH)(Aralkyl)(Alkyl),
(Aralkyl)(H)C(OH)-P(=O)(OH)-C(OH)(Carboxyalkyl)(Alkyl),
(Aralkyl)(Aralkyl)C(OH)-P(=O)(OH)-C(OH)(Carboxyalkyl)(Alkyl),
(Aralkyl)(Carboxyalkyl)C(OH)-P(=O)(OH)-C(OH)(Carboxyalkyl)(Alkyl),
(Alkyf)(H)C(OH)-P(=O)(OH)-C(OH)(Aralkyl)(Aralkyl),
(Aralkyl)(H)C(OH)-P(=O)(OH)-C(OH)(Aralkyl)(Aralkyl),
(Carboxyalkyl)(H)C(OH)-P(=O)(OH)-C(OH)(Aralkyl)(Aralkyl),
(Aralkyl)(Alkyl)C(OH)-P(=O)(OH)-C(OH)(Aralkyl)(Aralkyl),
(Carboxyalkyl)(Aralkyl)C(OH)-P(=O)(OH)-C(OH)(Aralkyl)(Aralkyl),
(Alkyl)(Carboxyalkyl)C(OH)-P(=O)(OH)-C(OH)(Aralkyl)(Aralkyl),
(Aralkyl)(Carboxyalkyl)C(OH)-P(=O)(OH)-C(OH)(Aralkyl)(Aralkyl),
(Carboxyalkyl)(Carboxyalkyl)C(OH)-P(=O)(OH)-C(OH)(Aralkyl)(Aralkyl),
(Alkyl)(H)C(OH)-P(=O)(OH)-C(OH)(Aralkyl)(Carboxyalkyl),
(Aralkyl)(H)C(OH)-P(=O)(OH)-C(OH)(Aralkyl)(Carboxyalkyl),
(Carboxyalkyl)(H)C(OH)-P(=O)(OH)-C(OH)(Aralkyl)(Carboxyalkyl),
(Aralkyl)(Alkyl)C(OH)-P(=O)(OH)-C(OH)(Aralkyl)(Carboxyalkyl),
(Carboxyalkyl)(Alkyl)C(OH)-P(=O)(OH)-C(OH)(Aralkyl)(Carboxyalkyl),
(Carboxyalkyl)(Carboxyalkyl)C(OH)-P(=O)(OH)-C(OH)(Aralkyl)(Carboxyalkyl),
(Aralkyl)(H)C(OH)-P(=O)(OH)-C(OH)(Carboxyalkyl)(Carboxyalkyl),
(Aralkyl)(Alkyl)C(OH)-P(=O)(OH)-C(OH)(Carboxyalkyl)(Carboxyalkyl),
(Alkyl)(Aralkyl)C(OH)-P(=O)(OH)-C(OH)(Carboxyalkyl)(Carboxyalkyl),
(Aralkyl)(Aralkyl)C(OH)-P(=O)(OH)-C(OH)(Carboxyalkyl)(Carboxyalkyl),
(Carboxyalkyl)(Aralkyl)C(OH)-P(=O)(OH)-C(OH)(Carboxyalkyl)(Carboxyalkyl),
(Aralkyl)(Carboxyalkyl)C(OH)-P(=O)(OH)-C(OH)(Carboxyalkyl)(Carboxyalkyl).

Erfindungsgemäße Verbindungen sind auch die folgenden unsymmetrisch substituierten Phosphinsäuren:
(H)(H)C(OH)-P(=O)(OH)-C(OH)(H)(Alkaryl),
(H)(H)C(OH)-P(=O)(OH)-C(OH)(Alkaryl)(Alkyl),
(H)(H)C(OH)-P(=O)(OH)-C(OH)(Alkaryl)(Alkaryl),
(H)(H)C(OH)-P(=O)(OH)-C(OH)(Alkaryl)(Carboxyalkyl),
(H)(Alkaryl)C(OH)-P(=O)(OH)-C(OH)(H)(Alkyl),
(H)(Alkyl)C(OH)-P(=O)(OH)-C(OH)(H)(Alkaryl),
(H)(Alkaryl)C(OH)-P(=O)(OH)-C(OH)(H)(Carboxyalkyl),
(H)(Alkaryl)C(OH)-P(=O)(OH)-C(OH)(Alkyl)(Alkyl),
(H)(H)C(OH)-P(=O)(OH)-C(OH)(Alkaryl)(Alkyl),
(H)(Alkyl)C(OH)-P(=O)(OH)-C(OH)(Alkaryl)(Alkyl),
(H)(Alkaryl)C(OH)-P(=O)(OH)-C(OH)(Alkaryl)(Alkyl),
(H)(Carboxyalkyl)C(OH)-P(=O)(OH)-C(OH)(Alkaryl)(Alkyl),
(H)(Alkaryl)C(OH)-P(=O)(OH)-C(OH)(Carboxyalkyl)(Alkyl),
(H)(H)C(OH)-P(=O)(OH)-C(OH)(Alkaryl)(Alkaryl),
(H)(Alkyl)C(OH)-P(=O)(OH)-C(OH)(Alkaryl)(Alkaryl),
(H)(Alkaryl)C(OH)-P(=O)(OH)-C(OH)(Alkaryl)(Alkaryl),
(H)(Carboxyalkyl)C(OH)-P(=O)(OH)-C(OH)(Alkaryl)(Alkaryl),
(H)(H)C(OH)-P(=O)(OH)-C(OH)(Alkaryl)(Carboxyalkyl),
(H)(Alkyl)C(OH)-P(=O)(OH)-C(OH)(Alkaryl)(Carboxyalkyl),
(H)(Alkaryl)C(OH)-P(=O)(OH)-C(OH)(Alkaryl)(Carboxyalkyl),
(H)(Carboxyalkyl)C(OH)-P(=O)(OH)-C(OH)(Alkaryl)(Carboxyalkyl),
(H)(Alkaryl)C(OH)-P(=O)(OH)-C(OH)(Carboxyalkyl)(Carboxyalkyl),
(Alkaryl)(Alkyl)C(OH)-P(=O)(OH)-C(OH)(Alkyl)(Alkyl),
(Alkyl)(Alkaryl)C(OH)-P(=O)(OH)-C(OH)(Alkyl)(Alkyl),
(Alkaryl)(Alkaryl)C(OH)-P(=O)(OH)-C(OH)(Alkyl)(Alkyl),
(Carboxyalkyl)(Alkaryl)C(OH)-P(=O)(OH)-C(OH)(Alkyl)(Alkyl),
(Alkaryl)(Carboxyalkyl)C(OH)-P(=O)(OH)-C(OH)(Alkyl)(Alkyl),
(Alkyl)(H)C(OH)-P(=O)(OH)-C(OH)(Alkaryl)(Alkyl),
(Alkaryl)(H)C(OH)-P(=O)(OH)-C(OH)(Alkaryl)(Alkyl),
(Carboxyalkyl)(H)C(OH)-P(=O)(OH)-C(OH)(Alkaryl)(Alkyl),
(Alkyl)(Alkyl)C(OH)-P(=O)(OH)-C(OH)(Alkaryl)(Alkyl),
(Carboxyalkyl)(Alkyl)C(OH)-P(=O)(OH)-C(OH)(Alkaryl)(Alkyl),
(Alkaryl)(Alkaryl)C(OH)-P(=O)(OH)-C(OH)(Alkaryl)(Alkyl),
(Alkyl)(Carboxyalkyl)C(OH)-P(=O)(OH)-C(OH)(Alkaryl)(Alkyl),
(Alkaryl)(Carboxyalkyl)C(OH)-P(=O)(OH)-C(OH)(Alkaryl)(Alkyl),
(Carboxyalkyl)(Carboxyalkyl)C(OH)-P(=O)(OH)-C(OH)(Alkaryl)(Alkyl),
(Alkaryl)(H)C(OH)-P(=O)(OH)-C(OH)(Carboxyalkyl)(Alkyl),
(Alkaryl)(Alkaryl)C(OH)-P(=O)(OH)-C(OH)(Carboxyalkyl)(Alkyl),
(Alkaryl)(Carboxyalkyl)C(OH)-P(=O)(OH)-C(OH)(Carboxyalkyl)(Alkyl),
(Alkyl)(H)C(OH)-P(=O)(OH)-C(OH)(Alkaryl)(Alkaryl),
(Atkaryl)(H)C(OH)-P(=O)(OH)-C(OH)(Alkaryl)(Alkaryl),
(Carboxyalkyf)(H)C(OH)-P(=O)(OH)-C(OH)(Alkaryl)(Alkaryl),
(Alkaryl)(Alkyl)C(OH)-P(=O)(OH)-C(OH)(Alkaryl)(Alkaryl),
(Carboxyalkyl)(Alkaryl)C(OH)-P(=O)(OH)-C(OH)(Alkaryl)(Alkaryl),
(Alkyl)(Carboxyalkyl)C(OH)-P(=O)(OH)-C(OH)(Alkaryl)(Alkaryl),
(Alkaryl)(Carboxyalkyl)C(OH)-P(=O)(OH)-C(OH)(Alkaryl)(Alkaryl),
(Carboxyalkyl)(Carboxyalkyl)C(OH)-P(=O)(OH)-C(OH)(Alkaryl)(Alkaryl),
(Alkyl)(H)C(OH)-P(=O)(OH)-C(OH)(Alkaryl)(Carboxyalkyl),
(Alkaryl)(H)C(OH)-P(=O)(OH)-C(OH)(Alkaryl)(Carboxyalkyl),
(Carboxyalkyl)(H)C(OH)-P(=O)(OH)-C(OH)(Alkaryl)(Carboxyalkyl),
(Alkaryl)(Alkyl)C(OH)-P(=O)(OH)-C(OH)(Alkaryl)(Carboxyalkyl),
(Carboxyalkyl)(Alkyl)C(OH)-P(=O)(OH)-C(OH)(Alkaryl)(Carboxyalkyl),
(Carboxyalkyl)(Carboxyalkyl)C(OH)-P(=O)(OH)-C(OH)(Alkaryl)(Carboxyalkyl),
(Alkaryl)(H)C(OH)-P(=O)(OH)-C(OH)(Carboxyalkyl)(Carboxyalkyl),
(Alkaryl)(Alkyl)C(OH)-P(=O)(OH)-C(OH)(Carboxyalkyl)(Carboxyalkyl),
(Alkyl)(Alkaryl)C(OH)-P(=O)(OH)-C(OH)(Carboxyalkyl)(Carboxyalkyl),
(Alkaryl)(Alkaryl)C(OH)-P(=O)(OH)-C(OH)(Carboxyalkyl)(Carboxyalkyl),
(Carboxyalkyl)(Alkaryl)C(OH)-P(=O)(OH)-C(OH)(Carboxyalkyl)(Carboxyalkyl),
(Alkaryl)(Carboxyalkyl)C(OH)-P(=O)(OH)-C(OH)(Carboxyalkyl)(Carboxyalkyl).

Erfindungsgemäße Verbindungen sind auch die folgenden unsymmetrisch substituierten Phosphinsäuren:
(H)(H)C(OH)-P(=O)(OH)-C(OH)(H)(Hydroxyalkyl),
(H)(H)C(OH)-P(=O)(OH)-C(OH)(Hydroxyalkyl)(Alkyl),
(H)(H)C(OH)-P(=O)(OH)-C(OH)(Aryl)(Hydroxyalkyl),
(H)(H)C(OH)-P(=O)(OH)-C(OH)(Hydroxyalkyl)(Hydroxyalkyl),
(H)(Hydroxyalkyl)C(OH)-P(=O)(OH)-C(OH)(H)(Alkyl),
(H)(Alkyl)C(OH)-P(=O)(OH)-C(OH)(H)(Hydroxyalkyl),
(H)(Aryl)C(OH)-P(=O)(OH)-C(OH)(H)(Hydroxyalkyl),
(H)(Hydroxyalkyl)C(OH)-P(=O)(OH)-C(OH)(Alkyl)(Alkyl),
(H)(Hydroxyalkyl)C(OH)-P(=O)(OH)-C(OH)(Aryl)(Alkyl),
(H)(H)C(OH)-P(=O)(OH)-C(OH)(Hydroxyalkyl)(Alkyl),
(H)(Alkyl)C(OH)-P(=O)(OH)-C(OH)(Hydroxyalkyl)(Alkyl),
(H)(Aryl)C(OH)-P(=O)(OH)-C(OH)(Hydroxyalkyl)(Alkyl),
(H)(Hydroxyalkyl)C(OH)-P(=O)(OH)-C(OH)(Hydroxyalkyl)(Alkyl),
(H)(Hydroxyalkyl)C(OH)-P(=O)(OH)-C(OH)(Aryl)(Aryl),
(H)(H)C(OH)-P(=O)(OH)-C(OH)(Aryl)(Hydroxyalkyl),
(H)(Alkyl)C(OH)-P(=O)(OH)-C(OH)(Aryl)(Hydroxyalkyl),
(H)(Aryl)C(OH)-P(=O)(OH)-C(OH)(Aryl)(Hydroxyalkyl),
(H)(Hydroxyalkyl)C(OH)-P(=O)(OH)-C(OH)(Aryl)(Hydroxyalkyl),
(H)(H)C(OH)-P(=O)(OH)-C(OH)(Hydroxyalkyl)(Hydroxyalkyl),
(H)(Alkyl)C(OH)-P(=O)(OH)-C(OH)(Hydroxyalkyl)(Hydroxyalkyl),
(H)(Aryl)C(OH)-P(=O)(OH)-C(OH)(Hydroxyalkyl)(Hydroxyalkyl),
(H)(Hydroxyalkyl)C(OH)-P(=O)(OH)-C(OH)(Hydroxyalkyl)(Hydroxyalkyl),
(Hydroxyalkyl)(Alkyl)C(OH)-P(=O)(OH)-C(OH)(Alkyl)(Alkyl),
(Hydroxyalkyl)(Aryl)C(OH)-P(=O)(OH)-C(OH)(Alkyl)(Alkyl),
(Alkyl)(Hydroxyalkyl)C(OH)-P(=O)(OH)-C(OH)(Alkyl)(Alkyl),
(Aryl)(Hydroxyalkyl)C(OH)-P(=O)(OH)-C(OH)(Alkyl)(Alkyl),
(Hydroxyalkyl)(Hydroxyalkyl)C(OH)-P(=O)(OH)-C(OH)(Alkyl)(Alkyl),
(Hydroxyalkyl)(H)C(OH)-P(=O)(OH)-C(OH)(Aryl)(Alkyl),
(Hydroxyalkyl)(Alkyl)C(OH)-P(=O)(OH)-C(OH)(Aryl)(Alkyl),
(Alkyl)(Hydroxyalkyl)C(OH)-P(=O)(OH)-C(OH)(Aryl)(Alkyl),
(Aryl)(Hydroxyalkyl)C(OH)-P(=O)(OH)-C(OH)(Aryl)(Alkyl),
(Hydroxyalkyl)(Hydroxyalkyl)C(OH)-P(=O)(OH)-C(OH)(Aryl)(Alkyl),
(Alkyl)(H)C(OH)-P(=O)(OH)-C(OH)(Hydroxyalkyl)(Alkyl),
(Aryl)(H)C(OH)-P(=O)(OH)-C(OH)(Hydroxyalkyl)(Alkyl),
(Hydroxyalkyl)(H)C(OH)-P(=O)(OH)-C(OH)(Hydroxyalkyl)(Alkyl),
(Aryl)(Aryl)C(OH)-P(=O)(OH)-C(OH)(Hydroxyalkyl)(Alkyl),
(Aryl)(Hydroxyalkyl)C(OH)-P(=O)(OH)-C(OH)(Hydroxyalkyl)(Alkyl),
(Hydroxyalkyl)(Hydroxyalkyl)C(OH)-P(=O)(OH)-C(OH)(Hydroxyalkyl)(Alkyl),
(Hydroxyalkyl)(H)C(OH)-P(=O)(OH)-C(OH)(Aryl)(Aryl),
(Hydroxyalkyl)(Aryl)C(OH)-P(=O)(OH)-C(OH)(Aryl)(Aryl),
(Alkyl)(Hydroxyalkyl)C(OH)-P(=O)(OH)-C(OH)(Aryl)(Aryl),
(Aryl)(Hydroxyalkyl)C(OH)-P(=O)(OH)-C(OH)(Aryl)(Aryl),
(Hydroxyalkyl)(Hydroxyalkyl)C(OH)-P(=O)(OH)-C(OH)(Aryl)(Aryl),
(Alkyl)(H)C(OH)-P(=O)(OH)-C(OH)(Aryl)(Hydroxyalkyl),
(Aryl)(H)C(OH)-P(=O)(OH)-C(OH)(Aryl)(Hydroxyalkyl),
(Hydroxyalkyl)(H)C(OH)-P(=O)(OH)-C(OH)(Aryl)(Hydroxyalkyl),
(Aryl)(Alkyl)C(OH)-P(=O)(OH)-C(OH)(Aryl)(Hydroxyalkyl),
(Hydroxyalkyl)(Alkyl)C(OH)-P(=O)(OH)-C(OH)(Aryl)(Hydroxyalkyl),
(Hydroxyalkyl)(Hydroxyalkyl)C(OH)-P(=O)(OH)-C(OH)(Aryl)(Hydroxyalkyl),
(Alkyl)(H)C(OH)-P(=O)(OH)-C(OH)(Hydroxyalkyl)(Hydroxyalkyl),
(Aryl)(H)C(OH)-P(=O)(OH)-C(OH)(Hydroxyalkyl)(Hydroxyalkyl),
(Hydroxyalkyl)(H)C(OH)-P(=O)(OH)-C(OH)(Hydroxyalkyl)(Hydroxyalkyl),
(Alkyl)(Alkyl)C(OH)-P(=O)(OH)-C(OH)(Hydroxyalkyl)(Hydroxyalkyl),
(Aryl)(Alkyl)C(OH)-P(=O)(OH)-C(OH)(Hydroxyalkyl)(Hydroxyalkyl),
(Hydroxyalkyl)(Alkyl)C(OH)-P(=O)(OH)-C(OH)(Hydroxyalkyl)(Hydroxyalkyl),
(Alkyl)(Aryl)C(OH)-P(=O)(OH)-C(OH)(Hydroxyalkyl)(Hydroxyalkyl),
(Aryl)(Aryl)C(OH)-P(=O)(OH)-C(OH)(Hydroxyalkyl)(Hydroxyalkyl),
(Hydroxyalkyl)(Aryl)C(OH)-P(=O)(OH)-C(OH)(Hydroxyalkyl)(Hydroxyalkyl),
(Alkyl)(Hydroxyalkyl)C(OH)-P(=O)(OH)-C(OH)(Hydroxyalkyl)(Hydroxyalkyl),
(Aryl)(Hydroxyalkyl)C(OH)-P(=O)(OH)-C(OH)(Hydroxyalkyl)(Hydroxyalkyl).

Erfindungsgemäße Verbindungen sind auch die folgenden unsymmetrisch substituierten Phosphinsäuren:
(H)(H)C(OH)-P(=O)(OH)-C(OH)(H)(Methyl),
(H)(H)C(OH)-P(=O)(OH)-C(OH)(H)(Phenyl),
(H)(H)C(OH)-P(=O)(OH)-C(OH)(H)((CH₂)₂CO₂H),
(H)(H)C(OH)-P(=O)(OH)-C(OH)(Methyl)(Methyl),
(H)(H)C(OH)-P(=O)(OH)-C(OH)(Phenyl)(Methyl),
(H)(H)C(OH)-P(=O)(OH)-C(OH)((CH₂)₂CO₂H)(Methyl),
(H)(H)C(OH)-P(=O)(OH)-C(OH)(Phenyl)(Phenyl),
(H)(H)C(OH)-P(=O)(OH)-C(OH)(Phenyl)((CH₂)₂CO₂H),
(H)(H)C(OH)-P(=O)(OH)-C(OH)((CH₂)₂CO₂H)((CH₂)₂CO₂H),
(H)(Phenyl)C(OH)-P(=O)(OH)-C(OH)(H)(Methyl),
(H)((CH₂)₂CO₂H)C(OH)-P(=O)(OH)-C(OH)(H)(Methyl),
(H)(Methyl)C(OH)-P(=O)(OH)-C(OH)(H)(Phenyl),
(H)(Methyl)C(OH)-P(=O)(OH)-C(OH)(H)((CH₂)₂CO₂H),
(H)(Phenyl)C(OH)-P(=O)(OH)-C(OH)(H)((CH₂)₂CO₂H),
(H)(H)C(OH)-P(=O)(OH)-C(OH)(Methyl)(Methyl),
(H)(Methyl)C(OH)-P(=O)(OH)-C(OH)(Methyl)(Methyl),
(H)(Phenyl)C(OH)-P(=O)(OH)-C(OH)(Methyl)(Methyl),
(H)((CH₂)₂CO₂H)C(OH)-P(=O)(OH)-C(OH)(Methyl)(Methyl),
(H)(H)C(OH)-P(=O)(OH)-C(OH)(Phenyl)(Methyl),
(H)(Methyl)C(OH)-P(=O)(OH)-C(OH)(Phenyl)(Methyl),
(H)(Phenyl)C(OH)-P(=O)(OH)-C(OH)(Phenyl)(Methyl),
(H)((CH₂)₂CO₂H)C(OH)-P(=O)(OH)-C(OH)(Phenyl)(Methyl),
(H)(H)C(OH)-P(=O)(OH)-C(OH)((CH₂)₂CO₂H)(Methyl),
(H)(Methyl)C(OH)-P(=O)(OH)-C(OH)((CH₂)₂CO₂H)(Methyl),
(H)(Phenyl)C(OH)-P(=O)(OH)-C(OH)((CH₂)₂CO₂H)(Methyl),
(H)((CH₂)₂CO₂H)C(OH)-P(=O)(OH)-C(OH)((CH₂)₂CO₂H)(Methyl),
(H)(H)C(OH)-P(=O)(OH)-C(OH)(Phenyl)(Phenyl),
(H)(Methyl)C(OH)-P(=O)(OH)-C(OH)(Phenyl)(Phenyl),
(H)(Phenyl)C(OH)-P(=O)(OH)-C(OH)(Phenyl)(Phenyl),
(H)((CH₂)₂CO₂H)C(OH)-P(=O)(OH)-C(OH)(Phenyl)(Phenyl),
(H)(H)C(OH)-P(=O)(OH)-C(OH)(Phenyl)((CH₂)₂CO₂H),
(H)(Methyl)C(OH)-P(=O)(OH)-C(OH)(Phenyl)((CH₂)₂CO₂H),
(H)(Phenyl)C(OH)-P(=O)(OH)-C(OH)(Phenyl)((CH₂)₂CO₂H),
(H)((CH₂)₂CO₂H)C(OH)-P(=O)(OH)-C(OH)(Phenyl)((CH₂)₂CO₂H),
(H)(H)C(OH)-P(=O)(OH)-C(OH)((CH₂)₂CO₂H)((CH₂)₂CO₂H),
(H)(Methyl)C(OH)-P(=O)(OH)-C(OH)((CH₂)₂CO₂H)((CH₂)₂CO₂H),
(H)(Phenyl)C(OH)-P(=O)(OH)-C(OH)((CH₂)₂CO₂H)((CH₂)₂CO₂H),
(H)((CH₂)₂CO₂H)C(OH)-P(=O)(OH)-C(OH)((CH₂)₂CO₂H)((CH₂)₂CO₂H),
(Phenyl)(Methyl)C(OH)-P(=O)(OH)-C(OH)(Methyl)(Methyl),
((CH₂)₂CO₂H)(Methyl)C(OH)-P(=O)(OH)-C(OH)(Methyl)(Methyl),
(Methyl)(Phenyl)C(OH)-P(=O)(OH)-C(OH)(Methyl)(Methyl),
(Phenyl)(Phenyl)C(OH)-P(=O)(OH)-C(OH)(Methyl)(Methyl),
((CH₂)₂CO₂H)(Phenyl)C(OH)-P(=O)(OH)-C(OH)(Methyl)(Methyl),
(Methyl)((CH₂)₂CO₂H)C(OH)-P(=O)(OH)-C(OH)(Methyl)(Methyl),
(Phenyl)((CH₂)₂CO₂H)C(OH)-P(=O)(OH)-C(OH)(Methyl)(Methyl),
((CH₂)₂CO₂H)((CH₂)₂CO₂H)C(OH)-P(=O)(OH)-C(OH)(Methyl)(Methyl),
(Methyl)(H)C(OH)-P(=O)(OH)-C(OH)(Phenyl)(Methyl),
(Phenyl)(H)C(OH)-P(=O)(OH)-C(OH)(Phenyl)(Methyl),
((CH₂)₂CO₂H)(H)C(OH)-P(=O)(OH)-C(OH)(Phenyl)(Methyl),
(Methyl)(Methyl)C(OH)-P(=O)(OH)-C(OH)(Phenyl)(Methyf),
((CH₂)₂CO₂H)(Methyl)C(OH)-P(=O)(OH)-C(OH)(Phenyl)(Methyl),
(Phenyl)(Phenyl)C(OH)-P(=O)(OH)-C(OH)(Phenyl)(Methyl),
(Methyl)((CH₂)₂CO₂H)C(OH)-P(=O)(OH)-C(OH)(Phenyl)(Methyl),
(Phenyl)((CH₂)₂CO₂H)C(OH)-P(=O)(OH)-C(OH)(Phenyl)(Methyl),
((CH₂)₂CO₂H)((CH₂)₂CO₂H)C(OH)-P(=O)(OH)-C(OH)(Phenyl)(Methyl),
(Methyl)(H)C(OH)-P(=O)(OH)-C(OH)((CH₂)₂CO₂H)(Methyl),
(Phenyl)(H)C(OH)-P(=O)(OH)-C(OH)((CH₂)₂CO₂H)(Methyl),
((CH₂)₂CO₂H)(H)C(OH)-P(=O)(OH)-C(OH)((CH₂)₂CO₂H)(Methyl),
(Phenyl)(Phenyl)C(OH)-P(=O)(OH)-C(OH)((CH₂)₂CO₂H)(Methyl),
(Phenyl)((CH₂)₂CO₂H)C(OH)-P(=O)(OH)-C(OH)((CH₂)₂CO₂H)(Methyl),
((CH₂)₂CO₂H)((CH₂)₂CO₂H)C(OH)-P(=O)(OH)-C(OH)((CH₂)₂CO₂H)(Methyl),
(Methyl)(H)C(OH)-P(=O)(OH)-C(OH)(Phenyl)(Phenyl),
(Phenyl)(H)C(OH)-P(=O)(OH)-C(OH)(Phenyl)(Phenyl),
((CH₂)₂CO₂H)(H)C(OH)-P(=O)(OH)-C(OH)(Phenyl)(Phenyl),
(Phenyl)(Methyl)C(OH)-P(=O)(OH)-C(OH)(Phenyl)(Phenyl),
((CH₂)₂CO₂H)(Phenyl)C(OH)-P(=O)(OH)-C(OH)(Phenyl)(Phenyl),
(Methyl)((CH₂)₂CO₂H)C(OH)-P(=O)(OH)-C(OH)(Phenyl)(Phenyl),
(Phenyl)((CH₂)₂CO₂H)C(OH)-P(=O)(OH)-C(OH)(Phenyl)(Phenyl),
((CH₂)₂CO₂H)((CH₂)₂CO₂H)C(OH)-P(=O)(OH)-C(OH)(Phenyl)(Phenyl),
(Methyl)(H)C(OH)-P(=O)(OH)-C(OH)(Phenyl)((CH₂)₂CO₂H),
(Phenyl)(H)C(OH)-P(=O)(OH)-C(OH)(Phenyl)((CH₂)₂CO₂H),
((CH₂)₂CO₂H)(H)C(OH)-P(=O)(OH)-C(OH)(Phenyl)((CH₂)₂CO₂H),
(Phenyl)(Methyl)C(OH)-P(=O)(OH)-C(OH)(Phenyl)((CH₂)₂CO₂H),
((CH₂)₂CO₂H)(Methyl)C(OH)-P(=O)(OH)-C(OH)(Phenyl)((CH₂)₂CO₂H),
((CH₂)₂CO₂H)((CH₂)₂CO₂H)C(OH)-P(=O)(OH)-C(OH)(Phenyl)((CH₂)₂CO₂H),
(Methyl)(H)C(OH)-P(=O)(OH)-C(OH)((CH₂)₂CO₂H)((CH₂)₂CO₂H),
(Phenyl)(H)C(OH)-P(=O)(OH)-C(OH)((CH₂)₂CO₂H)((CH₂)₂CO₂H),
((CH₂)₂CO₂H)(H)C(OH)-P(=O)(OH)-C(OH)((CH₂)₂CO₂H)((CH₂)₂CO₂H),
(Methyl)(Methyl)C(OH)-P(=O)(OH)-C(OH)((CH₂)₂CO₂H)((CH₂)₂CO₂H),
(Phenyl)(Methyl)C(OH)-P(=O)(OH)-C(OH)((CH₂)₂CO₂H)((CH₂)₂CO₂H),
((CH₂)₂CO₂H)(Methyl)C(OH)-P(=O)(OH)-C(OH)((CH₂)₂CO₂H)((CH₂)₂CO₂H),
(Methyl)(Phenyl)C(OH)-P(=O)(OH)-C(OH)((CH₂)₂CO₂H)((CH₂)₂CO₂H),
(Phenyl)(Phenyl)C(OH)-P(=O)(OH)-C(OH)((CH₂)₂CO₂H)((CH₂)₂CO₂H),
((CH₂)₂CO₂H)(Phenyl)C(OH)-P(=O)(OH)-C(OH)((CH₂)₂CO₂H)((CH₂)₂CO₂H),
(Methyl)((CH₂)₂CO₂H)C(OH)-P(=O)(OH)-C(OH)((CH₂)₂CO₂H)((CH₂)₂CO₂H),
(Phenyl)((CH₂)₂CO₂H)C(OH)-P(=O)(OH)-C(OH)((CH₂)₂CO₂H)((CH₂)₂CO₂H),
((CH₂)₂CO₂H)((CH₂)₂CO₂H)C(OH)-P(=O)(OH)-C(OH)((CH₂)₂CO₂H)((CH₂)₂CO₂H).

Erfindungsgemäße Verbindungen sind auch die folgenden unsymmetrisch substituierten Phosphinsäuren:
(H)(H)C(OH)-P(=O)(OH)-C(OH)(H)(cyclo-Hexyl),
(H)(H)C(OH)-P(=O)(OH)-C(OH)(cyclo-Hexyl)(cyclo-Hexyl),
(H)(H)C(OH)-P(=O)(OH)-C(OH)(Phenyl)(cyclo-Hexyl),
(H)(H)C(OH)-P(=O)(OH)-C(OH)((CH₂)₂CO₂H)(cyclo-Hexyl),
(H)(Phenyl)C(OH)-P(=O)(OH)-C(OH)(H)(cyclo-Hexyl),
(H)((CH₂)₂CO₂H)C(OH)-P(=O)(OH)-C(OH)(H)(cyclo-Hexyl),
(H)(cyclo-Hexyl)C(OH)-P(=O)(OH)-C(OH)(H)(Phenyl),
(H)(cyclo-Hexyl)C(OH)-P(=O)(OH)-C(OH)(H)((CH₂)₂CO₂H),
(H)(H)C(OH)-P(=O)(OH)-C(OH)(cyclo-Hexyl)(cyclo-Hexyl),
(H)(cyclo-Hexyl)C(OH)-P(=O)(OH)-C(OH)(cyclo-Hexyl)(cyclo-Hexyl),
(H)(Phenyl)C(OH)-P(=O)(OH)-C(OH)(cyclo-Hexyl)(cyclo-Hexyl),
(H)((CH₂)₂CO₂H)C(OH)-P(=O)(OH)-C(OH)(cyclo-Hexyl)(cyclo-Hexyl),
(H)(H)C(OH)-P(=O)(OH)-C(OH)(Phenyl)(cyclo-Hexyl),
(H)(cyclo-Hexyl)C(OH)-P(=O)(OH)-C(OH)(Phenyl)(cyclo-Hexyl),
(H)(Phenyl)C(OH)-P(=O)(OH)-C(OH)(Phenyl)(cyclo-Hexyl),
(H)((CH₂)₂CO₂H)C(OH)-P(=O)(OH)-C(OH)(Phenyl)(cyclo-Hexyl),
(H)(H)C(OH)-P(=O)(OH)-C(OH)((CH₂)₂CO₂H)(cyclo-Hexyl),
(H)(cyclo-Hexyl)C(OH)-P(=O)(OH)-C(OH)((CH₂)₂CO₂H)(cyclo-Hexyl),
(H)(Phenyl)C(OH)-P(=O)(OH)-C(OH)((CH₂)₂CO₂H)(cyclo-Hexyl),
(H)((CH₂)₂CO₂H)C(OH)-P(=O)(OH)-C(OH)((CH₂)₂CO₂H)(cyclo-Hexyl),
(H)(cyclo-Hexyl)C(OH)-P(=O)(OH)-C(OH)(Phenyl)(Phenyl),
(H)(cyclo-Hexyl)C(OH)-P(=O)(OH)-C(OH)(Phenyl)((CH₂)₂CO₂H),
(H)(cyclo-Hexyl)C(OH)-P(=O)(OH)-C(OH)((CH₂)₂CO₂H)((CH₂)₂CO₂H),
(Phenyl)(cyclo-Hexyl)C(OH)-P(=O)(OH)-C(OH)(cyclo-Hexyl)(cyclo-Hexyl),
((CH₂)₂CO₂H)(cyclo-Hexyl)C(OH)-P(=O)(OH)-C(OH)(cyclo-Hexyl)(cyclo-Hexyl),
(cyclo-Hexyl)(Phenyl)C(OH)-P(=O)(OH)-C(OH)(cyclo-Hexyl)(cyclo-Hexyl),
(Phenyl)(Phenyl)C(OH)-P(=O)(OH)-C(OH)(cyclo-Hexyl)(cyclo-Hexyl),
((CH₂)₂CO₂H)(Phenyl)C(OH)-P(=O)(OH)-C(OH)(cyclo-Hexyl)(cyclo-Hexyl),
(cycfo-Hexyl)((CH₂)₂CO₂H)C(OH)-P(=O)(OH)-C(OH)(cyclo-Hexyl)(cyclo-Hexyl),
(Phenyl)((CH₂)₂CO₂H)C(OH)-P(=O)(OH)-C(OH)(cyclo-Hexyl)(cyclo-Hexyl),
((CH₂)₂CO₂H)((CH₂)₂CO₂H)C(OH)-P(=O)(OH)-C(OH)(cyclo-Hexyl)(cyclo-Hexyl),
(cyclo-Hexyl)(H)C(OH)-P(=O)(OH)-C(OH)(Phenyl)(cyclo-Hexyl),
(Phenyl)(H)C(OH)-P(=O)(OH)-C(OH)(Phenyl)(cyclo-Hexyl),
((CH₂)₂CO₂H)(H)C(OH)-P(=O)(OH)-C(OH)(Phenyl)(cyclo-Hexyl),
(cyclo-Hexyl)(cyclo-Hexyl)C(OH)-P(=O)(OH)-C(OH)(Phenyl)(cyclo-Hexyl),
((CH₂)₂CO₂H)(cyclo-Hexyl)C(OH)-P(=O)(OH)-C(OH)(Phenyl)(cyclo-Hexyl),
(Phenyl)(Phenyl)C(OH)-P(=O)(OH)-C(OH)(Phenyl)(cyclo-Hexyl),
(cyclo-Hexyl)((CH₂)₂CO₂H)C(OH)-P(=O)(OH)-C(OH)(Phenyl)(cyclo-Hexyl),
(Phenyl)((CH₂)₂CO₂H)C(OH)-P(=O)(OH)-C(OH)(Phenyl)(cyclo-Hexyl),
((CH₂)₂CO₂H)((CH₂)₂CO₂H)C(OH)-P(=O)(OH)-C(OH)(Phenyl)(cyclo-Hexyl),
(cyclo-Hexyl)(H)C(OH)-P(=O)(OH)-C(OH)((CH₂)₂CO₂H)(cyclo-Hexyl),
(Phenyl)(H)C(OH)-P(=O)(OH)-C(OH)((CH₂)₂CO₂H)(cyclo-Hexyl),
((CH₂)₂CO₂H)(H)C(OH)-P(=O)(OH)-C(OH)((CH₂)₂CO₂H)(cyclo-Hexyl),
(Phenyl)(Phenyl)C(OH)-P(=O)(OH)-C(OH)((CH₂)₂CO₂H)(cyclo-Hexyl),
(Phenyl)((CH₂)₂CO₂H)C(OH)-P(=O)(OH)-C(OH)((CH₂)₂CO₂H)(cyclo-Hexyl),
((CH₂)₂CO₂H)((CH₂)₂CO₂H)C(OH)-P(=O)(OH)-C(OH)((CH₂)₂CO₂H)(cyclo-Hexyl),
(cyclo-Hexyl)(H)C(OH)-P(=O)(OH)-C(OH)(Phenyl)(Phenyl),
(Phenyl)(cyclo-Hexyl)C(OH)-P(=O)(OH)-C(OH)(Phenyl)(Phenyl),
(cyclo-Hexyl)((CH₂)₂CO₂H)C(OH)-P(=O)(OH)-C(OH)(Phenyl)(Phenyl),
(cyclo-Hexyl)(H)C(OH)-P(=O)(OH)-C(OH)(Pheny)((CH₂)₂CO₂H),
(Phenyl)(cyclo-Hexyl)C(OH)-P(=O)(OH)-C(OH)(Phenyl)((CH₂)₂CO₂H),
((CH₂)₂CO₂H)(cyclo-Hexyl)C(OH)-P(=O)(OH)-C(OH)(Pheny)((CH₂)₂CO₂H),
(cyclo-Hexyl)(H)C(OH)-P(=O)(OH)-C(OH)((CH₂)₂CO₂H)((CH₂)₂CO₂H),
(cyclo-Hexyl)(cyclo-Hexyl)C(OH)-P(=O)(OH)-C(OH)((CH₂)₂CO₂H)((CH₂)₂CO₂H),
(Phenyl)(cyclo-Hexyl)C(OH)-P(=O)(OH)-C(OH)((CH₂)₂CO₂H)((CH₂)₂CO₂H),
((CH₂)₂CO₂H)(cyclo-Heoyl)C(OH)-P(=O)(OH)-C(OH)((CH₂)₂CO₂H)((CH₂)₂CO₂H),
(cyclo-Hexyl)(Phenyl)C(OH)-P(=O)(OH)-C(OH)((CH₂)₂CO₂H)((CH₂)₂CO₂H),
(cyclo-Hexyl)((CH₂)₂CO₂H)C(OH)-P(=O)(OH)-C(OH)((CH₂)₂CO₂H)((CH₂)₂CO₂H).

Erfindungsgemäße Verbindungen sind auch die folgenden unsymmetrisch substituierten Phosphinsäuren:
(H)(H)C(OH)-P(=O)(OH)-C(OH)(H)(Benzyl),
(H)(H)C(OH)-P(=O)(OH)-C(OH)(Benzyl)(Methyl),
(H)(H)C(OH)-P(=O)(OH)-C(OH)(Benzyl)(Benzyl),
(H)(H)C(OH)-P(=O)(OH)-C(OH)(Benzyl)((CH₂)₂CO₂H),
(H)(Benzyl)C(OH)-P(=O)(OH)-C(OH)(H)(Methyl),
(H)(Methyl)C(OH)-P(=O)(OH)-C(OH)(H)(Benzyl),
(H)(Benzyl)C(OH)-P(=O)(OH)-C(OH)(H)((CH₂)₂CO₂H),
(H)(Benzyl)C(OH)-P(=O)(OH)-C(OH)(Methyf)(Methyl),
(H)(H)C(OH)-P(=O)(OH)-C(OH)(Benzyl)(Methyl),
(H)(Methyl)C(OH)-P(=O)(OH)-C(OH)(Benzyl)(Methyl),
(H)(Benzyl)C(OH)-P(=O)(OH)-C(OH)(Benzyl)(Methyl),
(H)((CH₂)₂CO₂H)C(OH)-P(=O)(OH)-C(OH)(Benzyl)(Methyl),
(H)(Benzyl)C(OH)-P(=O)(OH)-C(OH)((CH₂)₂CO₂H)(Methyl),
(H)(H)C(OH)-P(=O)(OH)-C(OH)(Benzyl)(Benzyl),
(H)(Methyl)C(OH)-P(=O)(OH)-C(OH)(Benzyl)(Benzyl),
(H)(Benzyl)C(OH)-P(=O)(OH)-C(OH)(Benzyl)(Benzyl),
(H)((CH₂)₂CO₂H)C(OH)-P(=O)(OH)-C(OH)(Benzyl)(Benzyl),
(H)(H)C(OH)-P(=O)(OH)-C(OH)(Benzyl)((CH₂)₂CO₂H),
(H)(Methyl)C(OH)-P(=O)(OH)-C(OH)(Benzyl)((CH₂)₂CO₂H),
(H)(Benzyl)C(OH)-P(=O)(OH)-C(OH)(Benzyl)((CH₂)₂CO₂H),
(H)((CH₂)₂CO₂H)C(OH)-P(=O)(OH)-C(OH)(Benryl)((CH₂)₂CO₂H),
(H)(Benzyl)C(OH)-P(=O)(OH)-C(OH)((CH₂)₂CO₂H)((CH₂)₂CO₂H),
(Benzyl)(Methyl)C(OH)-P(=O)(OH)-C(OH)(Methyl)(Methyl),
(Methyl)(Benzyl)C(OH)-P(=O)(OH)-C(OH)(Methyl)(Methyl),
(Benzyl)(Benzyl)C(OH)-P(=O)(OH)-C(OH)(Methyl)(Methyl),
((CH₂)₂CO₂H)(Benzyl)C(OH)-P(=O)(OH)-C(OH)(Methyf)(Methyl),
(Benzyl)((CH₂)₂CO₂H)C(OH)-P(=O)(OH)-C(OH)(Methyf)(Methyf),
(Methyl)(H)C(OH)-P(=O)(OH)-C(OH)(Benzyl)(Methyl),
(Benzyl)(H)C(OH)-P(=O)(OH)-C(OH)(Benzyl)(Methyl),
((CH₂)₂CO₂H)(H)C(OH)-P(=O)(OH)-C(OH)(Benzyl)(Methyl),
(Methyl)(Methyl)C(OH)-P(=O)(OH)-C(OH)(Benzyl)(Methyl),
((CH₂)₂CO₂H)(Methyl)C(OH)-P(=O)(OH)-C(OH)(Benzyl)(Methyl),
(Benzyl)(Benzyl)C(OH)-P(=O)(OH)-C(OH)(Benryl)(Methyl),
(Methyl)((CH₂)₂CO₂H)C(OH)-P(=O)(OH)-C(OH)(Benzyl)(Methyl),
(Benzyl)((CH₂)₂CO₂H)C(OH)-P(=O)(OH)-C(OH)(Benzyl)(Methyl),
((CH₂)₂CO₂H)((CH₂)₂CO₂H)C(OH)-P(=O)(OH)-C(OH)(Benzyl)(Methyl),
(Benzyl)(H)C(OH)-P(=O)(OH)-C(OH)((CH₂)₂CO₂H)(Methyl),
(Benzyl)(Benzyl)C(OH)-P(=O)(OH)-C(OH)((CH₂)₂CO₂H)(Methyl),
(Benzyl)((CH₂)₂CO₂H)C(OH)-P(=O)(OH)-C(OH)((CH₂)₂CO₂H)(Methyl),
(Methyl)(H)C(OH)-P(=O)(OH)-C(OH)(Benzyl)(Benzyl),
(Benzyl)(H)C(OH)-P(=O)(OH)-C(OH)(Benzyl)(Benzyl),
((CH₂)₂CO₂H)(H)C(OH)-P(=O)(OH)-C(OH)(Benzyl)(Benzyl),
(Benzyl)(Methyl)C(OH)-P(=O)(OH)-C(OH)(Benzyl)(Benzyl),
((CH₂)₂CO₂H)(Benzyl)C(OH)-P(=O)(OH)-C(OH)(Benzyl)(Benzyl),
(Methyl)((CH₂)₂CO₂H)C(OH)-P(=O)(OH)-C(OH)(Benzyl)(Benzyl),
(Benryf)((CH₂)₂CO₂H)C(OH)-P(=O)(OH)-C(OH)(Benzyl)(Benzyl),
((CH₂)₂CO₂H)((CH₂)₂CO₂H)C(OH)-P(=O)(OH)-C(OH)(Benzyl)(Benzyl),
(Methyl)(H)C(OH)-P(=O)(OH)-C(OH)(Benzyl)((CH₂)₂CO₂H),
(Benzyl)(H)C(OH)-P(=O)(OH)-C(OH)(Benzyl)((CH₂)₂CO₂H),
((CH₂)₂CO₂H)(H)C(OH)-P(=O)(OH)-C(OH)(Benzyl)((CH₂)₂CO₂H),
(Benzyl)(Methyl)C(OH)-P(=O)(OH)-C(OH)(Benzyl)((CH₂)₂CO₂H),
((CH₂)₂CO₂H)(Methyl)C(OH)-P(=O)(OH)-C(OH)(Benzyl)((CH₂)₂CO₂H),
((CH₂)₂CO₂H)((CH₂)₂CO₂H)C(OH)-P(=O)(OH)-C(OH)(Benryl)((CH₂)₂CO₂H),
(Benzyl)(H)C(OH)-P(=O)(OH)-C(OH)((CH₂)₂CO₂H)((CH₂)₂CO₂H),
(Benzyl)(Methyl)C(OH)-P(=O)(OH)-C(OH)((CH₂)₂CO₂H)((CH₂)₂CO₂H),
(Methyl)(Benzyl)C(OH)-P(=O)(OH)-C(OH)((CH₂)₂CO₂H)((CH₂)₂CO₂H),
(Benzyl)(Benzyl)C(OH)-P(=O)(OH)-C(OH)((CH₂)₂CO₂H)((CH₂)₂CO₂H),
((CH₂)₂CO₂H)(Benzyl)C(OH)-P(=O)(OH)-C(OH)((CH₂)₂CO₂H)((CH₂)₂CO₂H),
(Benryl)((CH₂)₂CO₂H)C(OH)-P(=O)(OH)-C(OH)((CH₂)₂CO₂H)((CH₂)₂CO₂H),

Erfindungsgemäße Verbindungen sind auch die folgenden unsymmetrisch substituierten Phosphinsäuren:
(H)(H)C(OH)-P(=O)(OH)-C(OH)(H)(Tolyl),
(H)(H)C(OH)-P(=O)(OH)-C(OH)(Tolyl)(Methyl),
(H)(H)C(OH)-P(=O)(OH)-C(OH)(Tolyl)(Tolyl),
(H)(H)C(OH)-P(=O)(OH)-C(OH)(Tolyl)((CH₂)₂CO₂H),
(H)(Tolyl)C(OH)-P(=O)(OH)-C(OH)(H)(Methyl),
(H)(Methyl)C(OH)-P(=O)(OH)-C(OH)(H)(Tolyl),
(H)(Tolyl)C(OH)-P(=O)(OH)-C(OH)(H)((CH₂)₂CO₂H),
(H)(Tolyl)C(OH)-P(=O)(OH)-C(OH)(Methyl)(Methyl),
(H)(H)C(OH)-P(=O)(OH)-C(OH)(Tolyl)(Methyl),
(H)(Methyl)C(OH)-P(=O)(OH)-C(OH)(Tolyl)(Methyf),
(H)(Tolyl)C(OH)-P(=O)(OH)-C(OH)(Tolyl)(Methyl),
(H)((CH₂)₂CO₂H)C(OH)-P(=O)(OH)-C(OH)(Tolyl)(Methyl),
(H)(Tolyl)C(OH)-P(=O)(OH)-C(OH)((CH₂)₂CO₂H)(Methyl),
(H)(H)C(OH)-P(=O)(OH)-C(OH)(Tolyl)(Tolyl),
(H)(Methyl)C(OH)-P(=O)(OH)-C(OH)(Tolyl)(Tolyl),
(H)(Tolyl)C(OH)-P(=O)(OH)-C(OH)(Tolyl)(Tolyl),
(H)((CH₂)₂CO₂H)C(OH)-P(=O)(OH)-C(OH)(Tolyl)(Tolyl),
(H)(H)C(OH)-P(=O)(OH)-C(OH)(Tolyl)((CH₂)₂CO₂H),
(H)(Methyl)C(OH)-P(=O)(OH)-C(OH)(Tolyl)((CH₂)₂CO₂H),
(H)(Tolyl)C(OH)-P(=O)(OH)-C(OH)(Tolyl)((CH₂)₂CO₂H),
(H)((CH₂)₂CO₂H)C(OH)-P(=O)(OH)-C(OH)(Tolyl)((CH₂)₂CO₂H),
(H)(Tolyl)C(OH)-P(=O)(OH)-C(OH)((CH₂)₂CO₂H)((CH₂)₂CO₂H),
(Tolyl)(Methyl)C(OH)-P(=O)(OH)-C(OH)(Methyl)(Methyl),
(Methyl)(Tolyl)C(OH)-P(=O)(OH)-C(OH)(Methyl)(Methyl),
(Tolyl)(Tolyl)C(OH)-P(=O)(OH)-C(OH)(Methyl)(Methyl),
((CH₂)₂CO₂H)(Tolyl)C(OH)-P(=O)(OH)-C(OH)(Methyl)(Methyl),
(Tolyl)((CH₂)₂CO₂H)C(OH)-P(=O)(OH)-C(OH)(Methyl)(Methyl),
(Methyl)(H)C(OH)-P(=O)(OH)-C(OH)(Tolyl)(Methyl),
(Tolyl)(H)C(OH)-P(=O)(OH)-C(OH)(Tolyl)(Methyl),
((CH₂)₂CO₂H)(H)C(OH)-P(=O)(OH)-C(OH)(Tolyl)(Methyl),
(Methyl)(Methyl)C(OH)-P(=O)(OH)-C(OH)(Tolyl)(Methyl),
((CH₂)₂CO₂H)(Methyl)C(OH)-P(=O)(OH)-C(OH)(Tolyl)(Methyl),
(Tolyl)(Tolyl)C(OH)-P(=O)(OH)-C(OH)(Tolyl)(Methyl),
(Methyf)((CH₂)₂CO₂H)C(OH)-P(=O)(OH)-C(OH)(Tolyl)(Methyl),
(Tolyl)((CH₂)₂CO₂H)C(OH)-P(=O)(OH)-C(OH)(Tolyl)(Methyl),
((CH₂)₂CO₂H)((CH₂)₂CO₂H)C(OH)-P(=O)(OH)-C(OH)(Tolyl)(Methyl),
(Tolyl)(H)C(OH)-P(=O)(OH)-C(OH)((CH₂)₂CO₂H)(Methyl),
(Tofyl)(Tolyl)C(OH)-P(=O)(OH)-C(OH)((CH₂)₂CO₂H)(Methyl),
(Tolyl)((CH₂)₂CO₂H)C(OH)-P(=O)(OH)-C(OH)((CH₂)₂CO₂H)(Methyl),
(Methyl)(H)C(OH)-P(=O)(OH)-C(OH)(Tolyl)(Tolyl),
(Tolyl)(H)C(OH)-P(=O)(OH)-C(OH)(Tolyl)(Tolyl),
((CH₂)₂CO₂H)(H)C(OH)-P(=O)(OH)-C(OH)(Tolyl)(Tolyl),
(Tolyl)(Methyl)C(OH)-P(=O)(OH)-C(OH)(Tolyl)(Tolyl),
((CH₂)₂CO₂H)(Tolyl)C(OH)-P(=O)(OH)-C(OH)(Tolyl)(Tolyl),
(Methyl)((CH₂)₂CO₂H)C(OH)-P(=O)(OH)-C(OH)(Tolyl)(Tolyl),
(Tolyl)((CH₂)₂CO₂H)C(OH)-P(=O)(OH)-C(OH)(Tolyl)(Tolyl),
((CH₂)₂CO₂H)((CH₂)₂CO₂H)C(OH)-P(=O)(OH)-C(OH)(Tolyl)(Tolyl),
(Methy)(H)C(OH)-P(=O)(OH)-C(OH)(Tolyl)((CH₂)₂CO₂H),
(Tolyl)(H)C(OH)-P(=O)(OH)-C(OH)(Tolyl)((CH₂)₂CO₂H),
((CH₂)₂CO₂H)(H)C(OH)-P(=O)(OH)-C(OH)(Tolyl)((CH₂)₂CO₂H),
(Tolyl)(Methyl)C(OH)-P(=O)(OH)-C(OH)(Tolyl)((CH₂)₂CO₂H),
((CH₂)₂CO₂H)(Methy)C(OH)-P(=O)(OH)-C(OH)(Tolyl)((CH₂)₂CO₂H),
((CH₂)₂CO₂H)((CH₂)₂CO₂H)C(OH)-P(=O)(OH)-C(OH)(Tolyl)((CH₂)₂CO₂H),
(Tolyl)(H)C(OH)-P(=O)(OH)-C(OH)((CH₂)₂CO₂H)((CH₂)₂CO₂H),
(Tolyl)(Methyl)C(OH)-P(=O)(OH)-C(OH)((CH₂)₂CO₂H)((CH₂)₂CO₂H),
(Methyl)(Tolyl)C(OH)-P(=O)(OH)-C(OH)((CH₂)₂CO₂H)((CH₂)₂CO₂H),
(Tolyl)(Tolyl)C(OH)-P(=O)(OH)-C(OH)((CH₂)₂CO₂H)((CH₂)₂CO₂H),
((CH₂)₂CO₂H)(Tolyl)C(OH)-P(=O)(OH)-C(OH)((CH₂)₂CO₂H)((CH₂)₂CO₂H),
(Tolyl)((CH₂)₂CO₂H)C(OH)-P(=O)(OH)-C(OH)((CH₂)₂CO₂H)((CH₂)₂CO₂H).

Erfindungsgemäße Verbindungen sind auch die folgenden unsymmetrisch substituierten Phosphinsäuren:
(H)(H)C(OH)-P(=O)(OH)-C(OH)(H)(Aminophenyl),
(H)(H)C(OH)-P(=O)(OH)-C(OH)(Aminophenyl)(Methyl),
(H)(H)C(OH)-P(=O)(OH)-C(OH)(Aminophenyl)(Aminophenyl),
(H)(H)C(OH)-P(=O)(OH)-C(OH)(Aminophenyl)((CH₂)₂CO₂H),
(H)(Aminophenyl)C(OH)-P(=O)(OH)-C(OH)(H)(Methyl),
(H)(Methyl)C(OH)-P(=O)(OH)-C(OH)(H)(Aminophenyl),
(H)(Aminophenyl)C(OH)-P(=O)(OH)-C(OH)(H)((CH₂)₂CO₂H),
(H)(Aminophenyl)C(OH)-P(=O)(OH)-C(OH)(Methyl)(Methyl),
(H)(H)C(OH)-P(=O)(OH)-C(OH)(Aminophenyl)(Methyl),
(H)(Methyl)C(OH)-P(=O)(OH)-C(OH)(Aminophenyl)(Methyl),
(H)(Aminophenyl)C(OH)-P(=O)(OH)-C(OH)(Aminophenyl)(Methyl),
(H)((CH₂)₂CO₂H)C(OH)-P(=O)(OH)-C(OH)(Aminophenyl)(Methyl),
(H)(Aminophenyl)C(OH)-P(=O)(OH)-C(OH)((CH₂)₂CO₂H)(Methyl),
(H)(H)C(OH)-P(=O)(OH)-C(OH)(Aminophenyl)(Aminophenyl),
(H)(Methyl)C(OH)-P(=O)(OH)-C(OH)(Aminophenyl)(Aminophenyl),
(H)(Aminophenyl)C(OH)-P(=O)(OH)-C(OH)(Aminophenyl)(Aminophenyl),
(H)((CH₂)₂CO₂H)C(OH)-P(=O)(OH)-C(OH)(Aminophenyl)(Aminophenyl),
(H)(H)C(OH)-P(=O)(OH)-C(OH)(Aminophenyl)((CH₂)₂CO₂H),
(H)(Methyl)C(OH)-P(=O)(OH)-C(OH)(Aminophenyl)((CH₂)₂CO₂H),
(H)(Aminophenyl)C(OH)-P(=O)(OH)-C(OH)(Aminophenyl)((CH₂)₂CO₂H),
(H)((CH₂)₂CO₂H)C(OH)-P(=O)(OH)-C(OH)(Aminophenyl)((CH₂)₂CO₂H),
(H)(Aminophenyl)C(OH)-P(=O)(OH)-C(OH)((CH₂)₂CO₂H)((CH₂)₂CO₂H),
(Aminophenyl)(Methyl)C(OH)-P(=O)(OH)-C(OH)(Methyl)(Methyl),
(Methyf)(Aminophenyl)C(OH)-P(=O)(OH)-C(OH)(Methyl)(Methyl),
(Aminophenyf)(Aminophenyl)C(OH)-P(=O)(OH)-C(OH)(Methyl)(Methyl),
((CH₂)₂CO₂H)(Aminophenyl)C(OH)-P(=O)(OH)-C(OH)(Methyl)(Methyl),
(Aminophenyl)((CH₂)₂CO₂H)C(OH)-P(=O)(OH)-C(OH)(Methyl)(Methyl),
(Methyl)(H)C(OH)-P(=O)(OH)-C(OH)(Aminophenyl)(Methyl),
(Aminophenyl)(H)C(OH)-P(=O)(OH)-C(OH)(Aminophenyl)(Methyl),
((CH₂)₂CO₂H)(H)C(OH)-P(=O)(OH)-C(OH)(Aminophenyl)(Methyl),
(Methyl)(Methyl)C(OH)-P(=O)(OH)-C(OH)(Aminophenyl)(Methyl),
((CH₂)₂CO₂H)(Methyl)C(OH)-P(=O)(OH)-C(OH)(Aminophenyl)(Methyl),
(Aminophenyl)(Aminophenyl)C(OH)-P(=O)(OH)-C(OH)(Aminophenyl)(Methyl),
(Methyl)((CH₂)₂CO₂H)C(OH)-P(=O)(OH)-C(OH)(Aminophenyl)(Methyl),
(Aminophenyl)((CH₂)₂CO₂H)C(OH)-P(=O)(OH)-C(OH)(Aminophenyl)(Methyl),
((CH₂)₂CO₂H)((CH₂)₂CO₂H)C(OH)-P(=O)(OH)-C(OH)(Aminophenyl)(Methyl),
(Aminophenyl)(H)C(OH)-P(=O)(OH)-C(OH)((CH₂)₂CO₂H)(Methyl),
(Aminophenyl)(Aminophenyl)C(OH)-P(=O)(OH)-C(OH)((CH₂)₂CO₂H)(Methyl),
(Aminophenyl)((CH₂)₂CO₂H)C(OH)-P(=O)(OH)-C(OH)((CH₂)₂CO₂H)(Methyl),
(Methyl)(H)C(OH)-P(=O)(OH)-C(OH)(Aminophenyl)(Aminophenyl),
(Aminophenyl)(H)C(OH)-P(=O)(OH)-C(OH)(Aminophenyl)(Aminophenyl),
((CH₂)₂CO₂H)(H)C(OH)-P(=O)(OH)-C(OH)(Aminophenyl)(Aminophenyl),
(Aminophenyl)(Methyl)C(OH)-P(=O)(OH)-C(OH)(Aminophenyl)(Aminophenyl),
((CH₂)₂CO₂H)(Aminophenyl)C(OH)-P(=O)(OH)-C(OH)(Aminophenyl)(Aminophenyl),
(Methyl)((CH₂)₂CO₂H)C(OH)-P(=O)(OH)-C(OH)(Aminophenyl)(Aminophenyl),
(Aminophenyl)((CH₂)₂CO₂H)C(OH)-P(=O)(OH)-C(OH)(Aminophenyl)(Aminophenyl),
((CH₂)₂CO₂H)((CH₂)₂CO₂H)C(OH)-P(=O)(OH)-C(OH)(Aminophenyl)(Aminophenyl),
(Methyl)(H)C(OH)-P(=O)(OH)-C(OH)(Aminophenyl)((CH₂)₂CO₂H),
(Aminophenyl)(H)C(OH)-P(=O)(OH)-C(OH)(Aminophenyl)((CH₂)₂CO₂H),
((CH₂)₂CO₂H)(H)C(OH)-P(=O)(OH)-C(OH)(Aminophenyl)((CH₂)₂CO₂H),
(Aminophenyl)(Methyl)C(OH)-P(=O)(OH)-C(OH)(Aminophenyl)((CH₂)₂CO₂H),
((CH₂)₂CO₂H)(Methyl)C(OH)-P(=O)(OH)-C(OH)(Aminophenyl)((CH₂)₂CO₂H),
((CH₂)₂CO₂H)((CH₂)₂CO₂H)C(OH)-P(=O)(OH)-C(OH)(Aminophenyl)((CH₂)₂CO₂H),
(Aminophenyl)(H)C(OH)-P(=O)(OH)-C(OH)((CH₂)₂CO₂H)((CH₂)₂CO₂H),
(Aminophenyl)(Methyl)C(OH)-P(=O)(OH)-C(OH)((CH₂)₂CO₂H)((CH₂)₂CO₂H),
(Methyl)(Aminophenyl)C(OH)-P(=O)(OH)-C(OH)((CH₂)₂CO₂H)((CH₂)₂CO₂H),
(Aminophenyl)(Aminophenyl)C(OH)-P(=O)(OH)-C(OH)((CH₂)CO₂H)((CH₂)₂CO₂H),
((CH₂)₂CO₂H)(Aminophenyl)C(OH)-P(=O)(OH)-C(OH)((CH₂)₂CO₂H)((CH₂)₂CO₂H),
(Aminophenyl)((CH₂)₂CO₂H)C(OH)-P(=O)(OH)-C(OH)((CH₂)₂CO₂H)((CH₂)₂CO₂H).

Erfindungsgemäße Verbindungen sind schleißlich auch die folgenden unsymmetrisch substituierten Phosphinsäuren:
(H)(H)C(OH)-P(=O)(OH)-C(OH)(H)(CH₂OH),
(H)(H)C(OH)-P(=O)(OH)-C(OH)(CH₂OH)(Methyl),
(H)(H)C(OH)-P(=O)(OH)-C(OH)(Phenyl)(CH₂OH),
(H)(H)C(OH)-P(=O)(OH)-C(OH)(CH₂OH)(CH₂OH),
(H)(CH₂OH)C(OH)-P(=O)(OH)-C(OH)(H)(Methyl),
(H)(Methyl)C(OH)-P(=O)(OH)-C(OH)(H)(CH₂OH),
(H)(Phenyl)C(OH)-P(=O)(OH)-C(OH)(H)(CH₂OH),
(H)(CH₂OH)C(OH)-P(=O)(OH)-C(OH)(Methyl)(Methyl),
(H)(CH₂OH)C(OH)-P(=O)(OH)-C(OH)(Phenyl)(Methyl),
(H)(H)C(OH)-P(=O)(OH)-C(OH)(CH₂OH)(Methyl),
(H)(Methyl)C(OH)-P(=O)(OH)-C(OH)(CH₂OH)(Methyl),
(H)(Phenyl)C(OH)-P(=O)(OH)-C(OH)(CH₂OH)(Methyl),
(H)(CH₂OH)C(OH)-P(=O)(OH)-C(OH)(CH₂OH)(Methyl),
(H)(CH₂OH)C(OH)-P(=O)(OH)-C(OH)(Phenyl)(Phenyl),
(H)(H)C(OH)-P(=O)(OH)-C(OH)(Phenyl)(CH₂OH),
(H)(Methyl)C(OH)-P(=O)(OH)-C(OH)(Phenyl)(CH₂OH),
(H)(Phenyl)C(OH)-P(=O)(OH)-C(OH)(Phenyl)(CH₂OH),
(H)(CH₂OH)C(OH)-P(=O)(OH)-C(OH)(Phenyl)(CH₂OH),
(H)(H)C(OH)-P(=O)(OH)-C(OH)(CH₂OH)(CH₂OH),
(H)(Methyl)C(OH)-P(=O)(OH)-C(OH)(CH₂OH)(CH₂OH),
(H)(Phenyl)C(OH)-P(=O)(OH)-C(OH)(CH₂OH)(CH₂OH),
(H)(CH₂OH)C(OH)-P(=O)(OH)-C(OH)(CH₂OH)(CH₂OH),
(CH₂OH)(Methyl)C(OH)-P(=O)(OH)-C(OH)(Methyl)(Methyl),
(CH₂OH)(Phenyl)C(OH)-P(=O)(OH)-C(OH)(Methyl)(Methyl),
(Methyl)(CH₂OH)C(OH)-P(=O)(OH)-C(OH)(Methyl)(Methyl),
(Phenyl)(CH₂OH)C(OH)-P(=O)(OH)-C(OH)(Methyl)(Methyl),
(CH₂OH)(CH₂OH)C(OH)-P(=O)(OH)-C(OH)(Methyl)(Methyl),
(CH₂OH)(H)C(OH)-P(=O)(OH)-C(OH)(Phenyl)(Methyl),
(CH₂OH)(Methyl)C(OH)-P(=O)(OH)-C(OH)(Phenyl)(Methyl),
(Methyl)(CH₂OH)C(OH)-P(=O)(OH)-C(OH)(Phenyl)(Methyl),
(Phenyl)(CH₂OH)C(OH)-P(=O)(OH)-C(OH)(Phenyl)(Methyl),
(CH₂OH)(CH₂OH)C(OH)-P(=O)(OH)-C(OH)(Phenyl)(Methyl),
(Methyl)(H)C(OH)-P(=O)(OH)-C(OH)(CH₂OH)(Methyl),
(Phenyl)(H)C(OH)-P(=O)(OH)-C(OH)(CH₂OH)(Methyl),
(CH₂OH)(H)C(OH)-P(=O)(OH)-C(OH)(CH₂OH)(Methyl),
(Phenyl)(Phenyl)C(OH)-P(=O)(OH)-C(OH)(CH₂OH)(Methyl),
(Phenyl)(CH₂OH)C(OH)-P(=O)(OH)-C(OH)(CH₂OH)(Methyl),
(CH₂OH)(CH₂OH)C(OH)-P(=O)(OH)-C(OH)(CH₂OH)(Methyl),
(CH₂OH)(H)C(OH)-P(=O)(OH)-C(OH)(Phenyl)(Phenyl),
(CH₂OH)(Phenyl)C(OH)-P(=O)(OH)-C(OH)(Phenyl)(Phenyl),
(Methyl)(CH₂OH)C(OH)-P(=O)(OH)-C(OH)(Phenyl)(Phenyl),
(Phenyl)(CH₂OH)C(OH)-P(=O)(OH)-C(OH)(Phenyl)(Phenyl),
(CH₂OH)(CH₂OH)C(OH)-P(=O)(OH)-C(OH)(Phenyl)(Phenyl),
(Methyl)(H)C(OH)-P(=O)(OH)-C(OH)(Phenyl)(CH₂OH),
(Phenyl)(H)C(OH)-P(=O)(OH)-C(OH)(Phenyl)(CH₂OH),
(CH₂OH)(H)C(OH)-P(=O)(OH)-C(OH)(Phenyl)(CH₂OH),
(Phenyl)(Methyl)C(OH)-P(=O)(OH)-C(OH)(Phenyl)(CH₂OH),
(CH₂OH)(Methyl)C(OH)-P(=O)(OH)-C(OH)(Phenyl)(CH₂OH),
(CH₂OH)(CH₂OH)C(OH)-P(=O)(OH)-C(OH)(Phenyl)(CH₂OH),
(Methyl)(H)C(OH)-P(=O)(OH)-C(OH)(CH₂OH)(CH₂OH),
(Phenyl)(H)C(OH)-P(=O)(OH)-C(OH)(CH₂OH)(CH₂OH),
(CH₂OH)(H)C(OH)-P(=O)(OH)-C(OH)(CH₂OH)(CH₂OH),
(Methyl)(Methyl)C(OH)-P(=O)(OH)-C(OH)(CH₂OH)(CH₂OH),
(Phenyl)(Methyl)C(OH)-P(=O)(OH)-C(OH)(CH₂OH)(CH₂OH),
(CH₂OH)(Methyl)C(OH)-P(=O)(OH)-C(OH)(CH₂OH)(CH₂OH),
(Methyl)(Phenyl)C(OH)-P(=O)(OH)-C(OH)(CH₂OH)(CH₂OH),
(Phenyl)(Phenyl)C(OH)-P(=O)(OH)-C(OH)(CH₂OH)(CH₂OH),
(CH₂OH)(Phenyl)C(OH)-P(=O)(OH)-C(OH)(CH₂OH)(CH₂OH),
(Methyl)(CH₂OH)C(OH)-P(=O)(OH)-C(OH)(CH₂OH)(CH₂OH),
(Phenyl)(CH₂OH)C(OH)-P(=O)(OH)-C(OH)(CH₂OH)(CH₂OH).

Bevorzugte Alkalihypophosphite, die beim erfindungsgemäßen Verfahren zur Herstellung der unsymmetrisch substituierten Phosphinsäuren eingesetzt werden können, sind Natrium- und Kaliumhypophosphite. Bevorzugte Erdalkalihypophosphite sind Magnesium- und Calciumhypophosphite. Bevorzugtes Hypophosphit der Elemente der dritten Hauptgruppe ist Aluminiumhypophosphit.

Bevorzugte Ester der Hypophosphorigen Säure sind Methyl-, Ethyl-, n-Propyl-, IsoPropyl, n-Butyl-, lso-Butyl-, t-Butyl-, n-Amyl, lso-Amyl-, Hexyl-, n-Octyl- und Ethylhexyl-Ester.

Die Reaktion erfolgt bevorzugt über eine Zeitdauer von 0,01 bis 1000 h, besonders bevorzugt von 0,5 bis 18 h.

Die Reaktion erfolgt bevorzugt bei einer Temperatur von -20 bis +500°C, besonders bevorzugt bei 70 bis 160°C.

Die Reaktion findet bevorzugt in saurem Milieu statt. Das mol-Verhältnis von Säure zur Phosphorquelle ist 0 zu 1 bis 4 zu 1, besonders bevorzugt 1 zu 1 bis 3 zu 1.

Die Phosphorquelle und/oder Reaktionspartner A bzw. B können Säurefunktionen wahrnehmen. Bevorzugt kann zusätzlich Säure zugesetzt werden. Besonders bevorzugte zugesetzte Säuren sind Mineralsäuren und/oder Carbonsäuren.

Bevorzugte Mineralsäuren sind Halogenwasserstoffsäuren, Oxosäuren der Elemente der siebten Hauptgruppe, Oxosäuren der Elemente der sechsten Hauptgruppe, Oxosäuren der Elemente der fünften Hauptgruppe, Oxosäuren der Elemente der dritten Hauptgruppe. Besonders bevorzugte Mineralsäuren sind Salz-, Schwefel- und/oder Phosphorsäure. Besonders bevorzugte Carbonsäuren sind Ameisensäure und/oder Essigsäure.

Die Reaktion findet bevorzugt in wässrigem Milieu statt. Das mol-Verhältnis von Wasser zur Phosphorquelle ist bevorzugt 0 zu 1 bis 20 zu 1

Der Reaktionsmischung kann bevorzugt Lösungsmittel zugesetzt sein. Das mol-Verhältnis von Lösungsmittel zur Phosphorquelle ist bevorzugt 0 zu 1 bis 30 zu 1.

Geeignete Lösungsmittel sind bevorzugt Alkohole, wie z.B. Methanol, Ethanol, lso-Propanol, n-Propanol, n-Butanol, lso-Butanol, t-Butanol, n-Amylalkohol, lso-Amylalkohol, t-Amylalkohol, n-Hexanol, n-Octanol, Iso- Octanol, n-Tridecanol, Benzylalkohol etc. Bevorzugt sind weiterhin Glycole wie z.B. Ethylenglycol, 1,2-Propandiol, 1,3-Propandiol, 1,3- Butandiol, 1,4-Butandiol, Diethylenglycol etc.; aliphatische Kohlenwasserstoffe wie Pentan, Hexan, Heptan, Octan, und Petrolether, Petroleumbenzin, Kerosin, Petroleum, Paraffinöl etc.; Aromatische Kohlenwasserstoffe wie Benzol, Toluol, Xylol, Mesitylen, Ethylbenzol, Diethylbenzol etc.; Halogenkohlenwasserstoffe wie Methylenchlorid, Chloroform, 1,2-Dichloroethan, Chlorobenzol, Tetrachlorkohlenstoff, Tetrabromoethylen etc.; Alicyclische Kohlenwasserstoffe wie Cyclopentan, Cyclohexan, und Methylcyclohexan etc.; Ether wie Anisol (Methyl phenyl ether), t-Butylmethylether, Dibenzylether, Diethylether, Dioxan, Diphenylether, Methylvinylether, Tetrahydrofuran, Triisopropylether etc.; Glycolether wie Diethylenglycoldiethylether, Diethylenglycoldimethylether (Diglyme), Diethylenglycolmonobutylether, Diethylenglycolmonomethylether, 1,2-Dimethoxyethan (DME Monoglyme), Ethylenglycolmonobutylether, Triethylenglycoldimethylether (Triglyme), Triethylengly-colmonomethylether etc.; Ketone wie Aceton, Diisobutylketon, Methyln-propylketon; Methylethylketon, Methyl-iso-butylketon etc; Ester wie Methylformat, Methylacetat, Ethylacetat, n-Propylacetat und n-Butylacetat etc. Eine oder mehrere dieser Verbindungen können allein oder in Kombination eingesetzt werden.

Besonders bevorzugte Lösungsmittel sind Wasser, Alkohole, Glycole, Aromaten, Aliphaten, Cycloaliphaten, Ether, Glycolether, Ketone, Ester, chlorierte Kohlenwasserstoffe und Aromaten oder Mischungen davon.

Die Herstellung der erfindungsgemäßen unsymmetrischen Phosphinsäuren kann nach verschiedenen Verfahren ausgeführt werden.

Bei den nachfolgenden Verfahren (1) bis (3)
- ist jeweils das mol-Verhältnis von Reaktionspartner A zur Phosphorquelle 0,5 zu 1 bis 10 zu 1, bevorzugt 1 zu 1 bis 3 zu 1;
- ist jeweils das mol-Verhältnis von Reaktionspartner B zur Phosphorquelle 0,5 zu 1 bis 10 zu 1, bevorzugt 1 zu 1 bis 3 zu 1;
- erfolgt die Reaktion über eine Zeitdauer von 0,01 bis 1000 h, bevorzugt 0,5 bis 8 h;
- erfolgt die Reaktion bei einer Temperatur von -20 bis +500°C, bevorzugt 100 bis 150°C;
- findet die Reaktion bevorzugt in saurem Milieu statt, wobei das mol-Verhältnis von Säure zur Phosphorquelle 0 zu 1 bis 4 zu 1, bevorzugt 1 zu 1 bis 3 zu 1 ist;
- findet die Reaktion bevorzugt in wässrigem Milieu statt, wobei das mol-Verhältnis von Wasser zur Phosphorquelle 0 zu 1 bis 20 zu 1, bevorzugt 4 zu 1 bis 15 zu 1 ist;
- kann der Reaktionsmischung Lösungsmittel zugesetzt sein, wobei das mol-Verhältnis von Lösungsmittel zur Phosphorquelle 0 zu 1 bis 20 zu 1 ist.

Nach dem Verfahren (1) ist die Phosphorquelle ein Salz der Hypophosphorigen Säure und dieses wird gleichzeitig oder nacheinander mit Reaktionspartner A und Reaktionspartner B umgesetzt und dann das Additionsprodukt durch Zugabe von Mineralsäuren und/oder Carbonsäuren in die Säureform umgewandelt.

Wahlweise kann die Umwandlung in einem Lösungsmittel erfolgen und/oder die Säureform des Additionsproduktes durch Fest-Flüssig-Trennung von Salzen abgetrennt werden und/oder durch thermische Trennverfahren von Lösungsmittel bzw. Nebenprodukten getrennt werden.

Diese Schritte erfolgen jeweils bei einem Druck von 10 bis 100.000.000 Pa, über eine Zeitdauer von 0,01 bis 1000h und einer Temperatur von -20 bis +500°C, bevorzugt bei 50 bis 350°C, das molare Verhältnis von Phosphorquelle zu Lösungsmittel ist 10 zu 1 bis 1 zu 100.

Nach einem Verfahren (2) ist die Phosphorquelle ein Salz der Hypophosphorige Säure, dem Mineralsäuren und/oder Carbonsäuren zugegeben werden und durch Fest-Flüssig-Trennung Salze abgetrennt werden, wonach dann gleichzeitig oder nacheinander mit Reaktionspartner A und Reaktionspartner B umgesetzt wird.

Wahlweise kann die die Säureform des Additionsproduktes durch thermische Trennverfahren von Säure, Lösungsmittel bzw. Nebenprodukten getrennt werden.

Diese Schritte erfolgen jeweils bei einem Druck von 10 bis 100.000.000 Pa, über eine Zeitdauer von 0,01 bis 1000h und einer Temperatur von -20 bis +500°C, besonders bevorzugt bei 50 bis 350°C.

Nach dem Verfahren (3), bei dem die Phosphorquelle ein Salz der Hypophosphorigen Säure ist, wird dieses gleichzeitig oder nacheinander mit Reaktionspartner A und Reaktionspartner B umgesetzt.

Wahlweise kann ein Säureüberschuß in einer Neutralisierung durch Zugabe von Alkalien entfernt werden. Dann liegt nur noch das Additionsproduktes in der Säureform vor. Wahlweise kann die Neutralisierung in einem Lösungsmittel erfolgen und/oder durch Fest-Flüssig-Trennung Salze abgetrennt werden, die Säureform des Additionsproduktes durch thermische Trennverfahren von Säure, Lösungsmittel bzw. Nebenprodukten getrennt werden.

Diese Schritte erfolgen jeweils bei einem Druck von 10 bis 100.000.000 Pa, über eine Zeitdauer von 0,01 bis 1000h und einer Temperatur von -20 bis +500°C, besonders bevorzugt bei 50 bis 350°C, das molare Verhältnis von Phosphorquelle zu Lösungs-mittel ist 10 zu 1 bis 1 zu 100. Das mol-Verhältnis von Alkalien zur Phosphorquelle ist bevorzugt 1 zu 1 bis 3 zu 1 besonders bevorzugt 0 zu 1 bis 2 zu 1.

Bei den nachfolgenden Verfahren (4a) bis (4c)
- ist jeweils das mol-Verhältnis von Reaktionspartner A zur Phosphorquelle 0,5 zu 1 bis 10 zu 1, bevorzugt 1 zu 1 bis 3 zu 1;
- ist jeweils das mol-Verhältnis von Reaktionspartner B zur Phosphorquelle 0,5 zu 1 bis 10 zu 1, bevorzugt 1 zu 1 bis 3 zu 1;
- erfolgt die Reaktion über eine Zeitdauer von 0,01 bis 1000h, bevorzugt 0,5 bis 18 h;
- erfolgt die Reaktion bei einer Temperatur von -20 bis +500°C, bevorzugt 100 bis 150°C;
- findet die Reaktion bevorzugt in saurem Milieu statt, das mol-Verhältnis von Säure zur Phosphorquelle ist 0 zu 1 bis 4 zu 1, bevorzugt 1 zu 1 bis 3 zu 1;
- findet die Reaktion bevorzugt in wässrigem Milieu statt, wobei das mol-Verhältnis von Wasser zur Phosphorquelle 0 zu 1 bis 20 zu 1, bevorzugt 3 zu 1 bis 15 zu 1 ist;
- kann der Reaktionsmischung Lösungsmittel zugesetzt sein, wobei das mol-Verhältnis von Lösungsmittel zur Phosphorquelle 0 zu 1 bis 30 zu 1, bevorzugt 0 zu 1 bis 20 zu 1 ist.

Beim Verfahren (4a) ist die Phosphorquelle Hypophosphorige Säure und diese wird gleichzeitig oder nacheinander mit Reaktionspartner A und Reaktionspartner B umgesetzt.

Wahlweise kann die Umwandlung in einem Lösungsmittel erfolgen und/oder die Säureform des Additionsproduktes durch thermische Trennverfahren von Säure, Lösungsmittel bzw. Nebenprodukten getrennt werden.

Diese Schritte erfolgen jeweils bei einem Druck von 10 bis 100.000.000 Pa, über eine Zeitdauer von 0,01 bis 1000h und einer Temperatur von -20 bis +500°C, besonders bevorzugt bei 50 bis 350°C, das molare Verhältnis von Phosphorquelle zu Lösungs-mittel ist 10 zu 1 bis 1 zu 100. Das mol-Verhältnis von Säure zur Phosphorquelle ist bevorzugt 0 zu 1 bis 4 zu 1, besonders bevorzugt 1 zu 1 bis 3 zu 1.

Die Konzentration der Hypophosphorigen Säure ist bevorzugt 1 bis 100 Gew.-%, besonders bevorzugt 10 bis 98 Gew.-%.

Beim Verfahren (4b) kann wahlweise die Säureform des Additionsproduktes auch durch thermische Trennverfahren von Säure, Lösungsmittel bzw. Nebenprodukten getrennt werden. Diese Schritte erfolgen jeweils bei einem Druck von 10 bis 100.000.000 Pa, über eine Zeitdauer von 0,01 bis 1000h und einer Temperatur von -20 bis +500°C, besonders bevorzugt bei 50 bis 350°C.

Beim Verfahren (4c) kann wahlweise ein Säureüberschuß in einer Neutralisierung durch Zugabe von Alkalien entfernt werden. Dann liegt nur noch das Additionsproduktes in der Säureform vor. Wahlweise kann die Neutralisierung in einem Lösungsmittel erfolgen und/oder durch Fest-Flüssig-Trennung Salze abgetrennt werden, die Säureform des Additionsproduktes durch thermische Trennverfahren von Säure, Lösungsmittel bzw. Nebenprodukten getrennt werden.

Diese Schritte erfolgen jeweils bei einem Druck von 10 bis 100.000.000 Pa, über eine Zeitdauer von 0,01 bis 1000h und einer Temperatur von -20 bis +500°C, besonders bevorzugt bei 50 bis 350°C, das molare Verhältnis von Phosphorquelle zu Lösungsmittel ist 10 zu 1 bis 1 zu 100. Das mol-Verhältnis von Alkalien zur Phosphorquelle ist bevorzugt 0 zu 1 bis 3 zu 1, besonders bevorzugt 0 zu 1 bis 2 zu 1.

Bei den nachfolgenden Verfahren (5a) bis (5c)
- ist jeweils das mol-Verhältnis von Reaktionspartner C zur Phosphorquelle 0,5 zu 1 bis 10 zu 1, bevorzugt 1 zu 1 bis 3 zu 1;
- erfolgt die Reaktion über eine Zeitdauer von 0,01 bis 1000h, bevorzugt 0,5 bis 8 h;
- erfolgt die Reaktion bei einer Temperatur von -20 bis +500°C, bevorzugt 78 bis 150°C;
- findet die Reaktion bevorzugt in saurem Milieu statt, das mol-Verhältnis von Säure zur Phosphorquelle ist 0 zu 1 bis 3 zu 1, bevorzugt 1 zu 1 bis 2 zu 1;
- findet die Reaktion bevorzugt in wässrigem Milieu statt, wobei das mol-Verhältnis von Wasser zur Phosphorquelle 0 zu 1 bis 15 zu 1 ist;
- kann der Reaktionsmischung Lösungsmittel zugesetzt sein, wobei das mol-Verhältnis von Lösungsmittel zur Phosphorquelle 0 zu 1 bis 20 zu 1 ist.

Bevorzugt ist ein Verfahren (5a), dessen Phosphorquelle ein Mono-Addukt des Typs A-P(=O)(OX)-H mit A gleich R₁R₂C(OH)- und X gleich H, Alkali oder Ammonium ist und dieses mit Reaktionspartner C zu einem Additionsprodukt umgesetzt wird.

Der Reaktionspartner C ist bevorzugt ein Keton des Typs R₃R₄C=O oder ein Aldehyd des Typs R₃CHO und/oder R₄CHO.

Beim Verfahren (5b) kann wahlweise die die Säureform des Additionsproduktes durch thermische Trennverfahren von Säure, Lösungsmittel bzw. Nebenprodukten getrennt werden.

Diese Schritte erfolgen jeweils bei einem Druck von 10 bis 100.000.000 Pa, über eine Zeitdauer von 0,01 bis 1000h und einer Temperatur von -20 bis +500°C, besonders bevorzugt bei 50 bis 350°C.

Beim Verfahren (5c) kann wahlweise ein Säureüberschuß in einer Neutralisierung durch Zugabe von Alkalien entfernt werden. Dann liegt nur noch das Additionsproduktes in der Säureform vor. Wahlweise kann die Neutralisierung in einem Lösungsmittel erfolgen und/oder durch Fest-Flüssig-Trennung Salze abgetrennt werden, die Säureform des Additionsproduktes durch thermische Trennverfahren von Säure, Lösungsmittel bzw. Nebenprodukten getrennt werden.

Diese Schritte erfolgen jeweils bei einem Druck von 10 bis 100.000.000 Pa, über eine Zeitdauer von 0,01 bis 1000h und einer Temperatur von -20 bis +500°C, besonders bevorzugt bei 50 bis 350°C, das molare Verhältnis von Phosphorquelle zu Lösungs-mittel ist 10 zu 1 bis 1 zu 100. Das mol-Verhältnis von Alkalien zur Phosphorquelle ist bevorzugt 0 zu 1 bis 3 zu 1 besonders bevorzugt 0 zu 1 bis 2 zu 1.

Bevorzugt ist die Verwendung der erfindungsgemäßen Phosphinsäuren
- als Binder z.B. für Giessereimassen und Formsande.
- als Vernetzer bzw. Beschleuniger beim Aushärten von Epoxyharzen, Polyurethanen, ungesättigten Polyesterharzen.
- als Polymerstabilisatoren, z.B. als Lichtschutzstabilisator und/oder Thermostabilisatoren für Baumwollgewebe, Polymerfasern, Kunststoffe.
- als Pflanzenschutzmittel, z.B. als Pflanzenwachstumsregulator, als Herbizid, Pestizid, Fungizid.
- als Therapeutikum oder Additiv in Therapeutika für Menschen und Tiere, z.B. als Enzymmodulator, zur Stimulierung von Gewebewachstum.
- als Sequestrierungsmittel z.B. zur Kontrolle von Ablagerungen in industriellen Wasserleitungssystemen, bei der Mineralölgewinnung und in Metallbehandlungsmitteln.
- als Mineralöl-Additiv z.B. als Antioxidans und zur Erhöhung der Octanzahl.
- als Korrosionsschutzmittel
- in Wasch- und Reinigungsmittelanwendungen, z.B. als Entfärbungsmittel.
- in Elektronikanwendungen z.B. in Polyelektrolyten für Kondensatoren, Batterien und Akkumulatoren, sowie als Radikalfänger in photosensitiven Schichten.

Bevorzugt ist die Verwendung der erfindungsgemäßen Phosphinsäure zur Herstellung von flammgeschützten thermoplastischen Polymerformmassen.

Bevorzugt enthält die flammgeschützte thermoplastische Polymerformmasse 0,5 bis 45 Gew.-% erfindungsgemäße Phosphinsäure.

Bevorzugt enthält die flammgeschützte thermoplastische Polymerformmasse
0,5 bis 45 Gew.-% erfindungsgemäße Phosphinsäure,
0,5 bis 95 Gew.-% thermoplastisches Polymer oder Mischungen derselben,
wobei die Summe der Komponenten 100 Gew.-% beträgt.

Bevorzugt enthält die flammgeschützte thermoplastische Polymerformmasse 0,5 bis 45 Gew.-% erfindungsgemäße Phosphinsäure, 0,5 bis 95 Gew.-% thermoplastisches Polymer oder Mischungen derselben, 0,5 bis 55 Gew.-% Additive 0,5 bis 55 Gew.-% Füllstoff bzw. Verstärkungsmaterialien, wobei die Summe der Komponenten 100 Gew.-% beträgt.

Bevorzugt enthält die flammgeschützte thermoplastische Polymerformmasse 10 bis 40 Gew.-% erfindungsgemäße Phosphinsäure, 10 bis 80 Gew.-% thermoplastisches Polymer oder Mischungen derselben, 2 bis 40 Gew.-% Additive, 2 bis 40 Gew.-% Füllstoff bzw. Verstärkungsmaterialien, wobei die Summe der Komponenten 100 Gew.-% beträgt.

Das Verfahren zur Herstellung von flammgeschützten thermoplastischen Polymerformmassen ist dadurch gekennzeichnet, dass die erfindungsgemäße Phosphinsäure mit dem Polymergranulat und evtl. Additiven vermischt und auf einem Doppelschnecken-Extruder (ZSK 25 WLE, 14,5 kg/h, 200 U/min, L/D: 4) bei Temperaturen von 170 °C (Polystyrol), ca. 270°C (PET, Polyethylenterephthalat), 230 bis 260°C (Polybutylenterephthalat, PBT), von 260 °C (PA6) bzw. von 260 bis 280°C (PA 66) eingearbeitet wird. Der homogenisierte Polymerstrang wird abgezogen, im Wasserbad gekühlt, anschließend granuliert und auf einen Restfeuchtegehalt von 0,05 bis 5 %, bevorzugt 0,1 bis 1 Gew.-% getrocknet.

Das Verfahren zur Herstellung einer flammgeschützten thermoplastischen Polymerformmasse ist dadurch gekennzeichnet, dass 1000 Gewichtsteile Dimethylterephthalat und 720 Gewichtsteile Ethylenglycol und 35 bis 700 Gewichtsteile erfindungsgemäßer Phosphinsäure polymerisiert werden. Wahlweise kann die Polymerisation in Gegenwart von Zinkacetat erfolgen. Wahlweise kann die flammgeschützten Polymerformmasse zu Fasern gesponnen werden.

Bevorzugt handelt es sich bei dem Polymer um ein thermoplastisches oder duroplastisches Polymer.

Bevorzugt handelt es sich bei den thermoplastischen Polymeren um Polymere von Mono- und Diolefinen, beispielsweise Polypropylen, Polyisobutylen, Polybuten-1, Pofy-4-methylpenten-1, Polyisopren oder Polybutadien sowie Polymerisate von Cyclo-olefinen wie z.B. von Cyclopenten oder Norbornen; ferner Polyethylen (das ggf. vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den thermoplastischen Polymeren um Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-lsobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, lsobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.

Bevorzugt handelt es sich bei den Polymeren um Kohlenwasserstoffharze (z.B. C₅-C₉) inklusive hydrierte Modifikationen davon (z.B. Klebrigmacherharze) und Mischungen von Polyalkylenen und Stärke.

Bevorzugt handelt es sich bei den thermoplastischen Polymeren um Polystyrol, Poly-(p-methylstyrol) und/oder Poly-(alpha-methylstyrol).

Bevorzugt handelt es sich bei den thermoplastischen Polymeren um Copolymere von Styrol oder alpha-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-lsopren-Styrol, Styrol-Ethylen/Butylen-Styrol oder Styrol-Ethylen/Propylen-Styrol.

Bevorzugt handelt es sich bei den thermoplastischen Polymeren um Pfropfcopolymere von Styrol oder alpha-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z.B. als sogenannte ABS-, MBS-, ASA- oder AES-Polymere bekannt sind.

Bevorzugt handelt es sich bei den thermoplastischen Polymeren um Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den thermoplastischen Polymeren um Polymere, die sich von alpha, beta -ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-copolymere, Acrylnitril-Vinylhalogenid-Copolymere oder Acrylnitril-Alkylmethacrylat-Butadien-Terpolymere.

Bevorzugt handelt es sich bei den thermoplastischen Polymeren um Polymere, die sich von ungesättigten Alkoholen und Aminen bzw. deren Acetalen oder Acylderivaten ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den thermoplastischen Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um thermoplastischen Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

Bevorzugt handelt es sich bei den thermoplastischen Polymeren um Polyphenylenoxide und -sulfide und deren Mischungen mit Styrolpolymeren oder Polyamiden.

Bevorzugt handelt es sich bei den thermoplastischen Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den thermoplastischen Polymeren um Polyamide und Copolyamide, die sich von Diaminen und Dicarbonsäuren und/oder von Aminocarbonsäuren oder den entsprechenden Lactamen ableiten, wie Polyamid 4, Polyamid 6 (®Akulon K122, DSM; ®Zytel 7301, Fa. DuPont; ®Durethan B 29, Fa. Bayer), Polyamid 6/6 (®Zytel 101, Fa. DuPont; ®Durethan A30, ®Durethan AKV, ®Durethan AM, Fa. Bayer; ®Ultramid A3, Fa BASF) 6/10, 6/9, 6/12, 4/6, 12/12, Polyamid 11, Polyamid 12 (®Grillamid L20, Fa. Ems Chemie), aromatische Polyamide ausgehend von m-Xylol, Diamin und Adipinsäure; Polyamide, hergestellt aus Hexamethylendiamin und Iso- und / oder Terephthalsäure und gegebenenfalls einem Elastomer als Modifikator, z.B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den thermoplastischen Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (®Celanex 2500, ®Celanex 2002, Fa Celanese; ®Ultradur, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den thermoplastischen Polymeren um Polycarbonate, Polyestercarbonate, auch um Polysulfone, Polyethersulfone und Polyetherketone.

Bevorzugt handelt es sich bei den Polymeren um Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Bevorzugt ist die Verwendung der erfindungsgemäßen Phosphinsäure zur Herstellung von flammgeschützten Polymer-Formkörpern, -Filmen, -Fäden und -Fasern.

Bevorzugt enthalten die flammgeschützten Polymer-Formkörper, -Filme, -Fäden und -Fasern 0,5 bis 45 Gew.-% erfindungsgemäße Phosphinsäure und 0,5 bis 99,5 Gew.-% thermoplastisches Polymer oder Mischungen derselben.

Bevorzugt enthalten die flammgeschützten Poiymer-Formkörper, -Filme, -Fäden und -Fasern 0,5 bis 45 Gew.-% erfindungsgemäße Phosphinsäure, 0,5 bis 98,5 Gew.-% thermoplastisches Polymer oder Mischungen derselben, 0,5 bis 55 Gew.-% Additive und 0,5 bis 55 Gew.-% Füllstoff bzw. Verstärkungsmaterialien.

Die Erfindung betrifft schließlich auch ein Verfahren zur Herstellung von flammgeschützten Polymer-Formkörpern, dadurch gekennzeichnet, dass erfindungsgemäße flammgeschützte Polymer-Formmassen durch Spritzgießen (z.B. Spritzgießmaschine (Typ Aarburg Allrounder) und Pressen, Schaumspritzgießen, Gasinnendruck-Spritzgießen, Blasformen, Foliengießen, Kalandern, Laminieren oder Beschichten bei höheren Temperaturen zum flammgeschützten Polymer-Formkörper verarbeitet wird.

Das Verfahren zur Herstellung von flammgeschützten Polymer-Formkörpern ist dadurch gekennzeichnet, dass die erfindungsgemäße flammgeschützte Formmasse bei geeigneten Massetemperaturen zu Polymer-Formkörpern verarbeitet wird.

Geeignete bevorzugte Massetemperaturen sind bei Polystyrol 200 bis 250°C, bei Polypropylen 200 bis 300°C, bei Polyethylenterephthalat (PET) 250 bis 290°C, bei Polybutylenterephthalat (PBT) 230 bis 270 °C, bei Polyamid 6 (PA 6) 260 bis 290°C, bei Polyamid 6.6 (PA 6.6) 6.6 260 bis 290 °C, bei Polycarbonat 280 bis 320°C.

Bevorzugt handelt es sich bei den duroplastische Polymeren um ungesättigte Polyesterharze, die sich von Copolyestern gesättigter und ungesättigter Dicarbonsäuren oder deren Anhydriden mit mehrwertigen Alkoholen, sowie Vinylverbindungen als Vernetzungsmittel ableiten. UP-Harze werden gehärtet durch radikalische Polymerisation mit Initiatoren (z.B. Peroxiden) und Beschleunigern.

Bevorzugte ungesättigte Dicarbonsäuren und -derivate zur Herstellung der Polyester sind Maleinsäureanhydrid und Fumarsäure.

Bevorzugte gesättigte Dicarbonsäuren sind Phthalsäure Isophthalsäure, Terephthalsäure, Tetrahydrophthalsäure, Adipinsäure.

Bevorzugte Diole sind 1,2 Propandiol, Ethylenglycol, Diethylenglycol und Neopentylglycol, ethoxyliertes oder propoxyliertes Bisphenol A.

Bevorzugte Vinylverbindung zur Vernetzung ist Styrol.

Bevorzugte Härtersysteme sind Peroxide und Metallcoinitiatoren z.B. Hydroperoxide und Cobaltoctanoat und/oder Benzoylperoxid und Aromatische Amine und/oder UV-Licht und Photosensibilisatoren z.B. Benzoinether.

Bevorzugte Hydroperoxide sind Di-tert.-butylperoxid, tert.-Butylperoctoat, tert.-Butylperpivalat, tert.-Butylper-2-ethylhexanoat, tert.-Butylpermaleinat, tert.-Butylperisobutyrat, Benzoylperoxid, Diacetylperoxid, Succinylperoxid, p-Chlorbenzoylperoxid, Dicyclohexylperoxydicarbonat.

Bevorzugt werden Initiatoren in Mengen von 0,1 bis 20 Gew. -%, vorzugsweise 0,2 bis 15 Gew.-%, berechnet auf die Masse aller Comonomeren, eingesetzt.

Bevorzugte Metallcoinitiatoren sind Kobalt-, Mangan-, Eisen-, Vanadium -, Nickel- oder Bleiverbindungen. Bevorzugt werden Metallcoinitiatoren in Mengen von 0.05 to 1 Gew. -%, berechnet auf die Masse aller Comonomeren, eingesetzt.

Bevorzugte aromatische Amine sind Dimethylanilin, Dimethyl-p-toluol, Diethyl-anilin und Phenyldiethanolamine

Ein Verfahren zur Herstellung von flammgeschützten Copolymerisaten ist dadurch gekennzeichnet, dass man (A) mindestens ein ethylenisch ungesättigtes Dicarbonsäureanhydrid, abgeleitet von mindestens einer C₄-C₈-Dicarbonsäure, (B) mindestens eine vinylaromatische Verbindung und (C) ein Polyol copolymerisiert, (D) mit erfindungsgemäßer Phosphinsäure umsetzt.

Ein Verfahren zur Herstellung von flammwidrigen duroplastischen Massen ist dadurch gekennzeichnet, dass man ein duroplastisches Harz mit einer Flammschutzkomponente aus erfindungsgemäßer Phosphinsäure vermischt und die resultierende Mischung bei Drücken von 3 bis 10 bar und Temperaturen von 20 bis 60°C nass presst (Kaltpressung).

Ein Verfahren zur Herstellung von flammwidrigen duroplastischen Massen ist dadurch gekennzeichnet, dass man ein duroplastisches Harz mit erfindungsgemäßer Phosphinsäure vermischt und die resultierende Mischung bei Drücken von 3 bis 10 bar und Temperaturen von 80 bis 150°C nass presst (Warm- oder Heisspressung).

Bevorzugt handelt es sich bei den Polymeren um vernetzte Epoxidharze, die sich von aliphatischen, cycloaliphatischen, heterocyclischen oder aromatischen Glycidylver- bindungen ableiten, z.B. Produkte von Bisphenol-A-diglycidylethem, Bisphenol-F-di-glycidylethern, die mittels üblichen Härtern und/oder Beschleunigern vernetzt werden.

Geeignete Glycidylverbindungen sind Bisphenol-A-diglycidylester, Bisphenol-F-diglycidylester, Polyglycidylester von Phenol-Formaldehydharzen und Kresol-Formaldehydharzen, Polyglycidylester von Pththal-, lsophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen.

Geeignete Härter sind Polyamine wie Diethylenetriamin Triethylentetramin, Aminoethylpiperazin, lsophorondiamin, Polyamidoamin, Diaminodiphenylmethan, Diaminodiphenylsulfone und Dicyandiamid.

Geeignete Härter sind mehrbasige Säuren oder deren Anhydride wie z.B. Phthalsäureanhydrid, Maleinsäureanhydrid, Tetrahydrophthalsäureanhydrid, Methyltetrahydrophthalsäureanhydrid, Hexahydrophthalsäureanhydrid und Methylhexahydrophthalsäureanhydrid,

Geeignete Härter sind Phenole wie z.B. Phenol-Novolak-Harz, Cresol-Novolak-Harz, Dicyclopentadien-Phenol-Addukt-Harz, Phenolaralkyl-Harz, Cresolaralkyl-Harz, Naphtholaralkyl Harz, Biphenol-modifiziertes Phenolaralkyl-Harz, Phenoltrimethylolmethan-Harz, Tetraphenyfolethan-Harz, Naphthol-Novolak-Harz, Naphthol-Phenol-Kocondensat-Harz, Naphthol-Cresol-Kocondensat-Harz, Biphenol-modifiziertes Phenol-Harz und Aminotriazin- modifiziertes Phenol-Harz.

Diese Härter können alleine oder in Kombination miteinander eingesetzt werden.

Geeignete Katalysatoren bzw. Beschleuniger für die Vernetzung bei der Polymerisation sind tertiäre Amine, Benzyldimethylamin, N-Alkylpyridine, Imidazol, 1-Methylimidazol, 2-Methylimidazol, 2-Ethyl-4-methylimidazol, 2-Ethyl-4-methylimidazol, 2-Phenylimidazol, 2-Heptadecylimidazol, Metallsalze organischer Säuren, Lewis Säuren und Amin-Komplex-Salze.

Epoxidharze sind geeignet zum Verguss von elektrischen bzw. elektronischen Bauteilen und für Tränk- und Imprägnierprozesse. In der Elektrotechnik werden die verwendeten Epoxidharze überwiegend flammwidrig ausgerüstet und für Leiterplatten und Isolatoren eingesetzt.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um vernetzbare Acrylharze, die sich von substituierten Acrylsäureestern ableiten, wie z.B. von Epoxyacrylaten, Urethanacrylaten öder Polyester-acrylaten.

Bevorzugt handelt es sich bei den Polymeren um Alkydharze, Polyesterharze und Acrylatharze, die mit Melaminharzen, Harnstoffharzen, lsocyanaten, lsocyanuraten, Polyisocyanaten oder Epoxidharzen vernetzt sind.

Die Erfindung betrifft auch eine flammgeschützte Polyurethan-Formmasse, hergestellt durch Reaktion von 0,1 bis 50 Gew.-Teilen erfindungsgemäßer Phosphinsäure mit 30 bis 65 Gew.-Teilen Polyisocyanat und 30 bis 65 Gew.-Teilen Polyol.

Das Verfahren zur Herstellung einer flammgeschützten Polyurethan-Formmasse ist dadurch gekennzeichnet, dass 170 bis 70 Gewichtsteile, bevorzugt 130 bis 80 Gewichtsteile, Polyisocyanate mit 100 Gewichtsteilen Polyol, 0,1 bis 50 Gewichtsteilen erfindungsgemäßer Phosphinsäure und 0,1 bis 4 Gewichtsteilen, besonders bevorzugt 1 bis 2 Gewichtsteile, Katalysator zur Reaktion gebracht werden und wahlweise mit 0,1 bis 1,8 Gewichtsteilen, vorzugsweise 0,3 bis 1,6 Gewichtsteilen Treibmittel aufgeschäumt werden.

Bevorzugte Polyole, sind Alkenoxidaddukte von Ethylenglykol, 1,2-Propandiol, Bisphenol A, Trimethylolpropan, Glycerin, Pentaerythrol, Sorbit, Zucker, abgebaute Stärke, Ethylendiamin, Diaminotoluol und/oder Anilin, die als ein Initiator dienen. Die bevorzugten Oxyalkylierungsmittel, enthalten bevorzugt von 2 bis 4 Kohlenstoffatome besonders bevorzugt sind es Ethylenoxid und Propylenoxid.

Bevorzugte Polyester-Polyole werden durch Polykondensation eines Polyalkoholes wie Ethylenglykol, Diäthylenglykol, Propylenglykol, 1,4-Butanediol, 1,5-Pentandiol, Methylpentandiol, 1,6-Hexanediol, Trimethylolpropan, Glycerin, Pentaerythritol, Diglycerol, Traubenzucker und/oder Sorbit, mit einer dibasischen Säure wie Oxalsäure, Malonsäure, Bernsteinsäure, Weinsäure, Adipinsäure, Sebacinsäure, Maleinsäure, Fumarsäure, Phthalsäure, Terephthalsäure erhalten. Diese Polyester-Polyole können alleine oder in Komination benutzt werden.

Geeignete Polyisocyanate sind aromatische, alicyclische or aliphatische Polyisocyanate, mit nicht weniger als zwei Isocyanat-Groupen und Mischungen davon. Bevorzugt sind aromatische Polyisocyanate wie Tolyldiisocyanat, Methylendiphenyldiisocyanat, Naphthylendiisocyanate, Xylylendiisocyanat, Tris/4-isocyanatophenyl)methan und Polymethylenepolyphenylendiisocyanate; alicyclische Polyisocyanate sind Methylendiphenyldiisocyanat, Tolyldiisocyanat und; aliphatische Polyisocyanate sind Hexamethylendiisocyanat, Isophorendiisocyanat, Demeryldiisocyanat, 1,1-Methylenbis(4-isocyanatocyclohexan-4,4'-Diisocyanatodicyclohexylmethan-Isomerengemisch, 1,4-Cyclohexyldiisocyanat, ^{(R)}Desmodur-Typen (Bayer) und Lysindiisocyanat und Mischungen davon.

Geeignete Polyisocyanate sind modifizierte Produkte, die durch Reaktion von Polyisocyanat mit Polyol, Harnstoff, Carbodiimid und/oder Biuret erhalten werden.

Geeignete Katalysatoren sind starke Basen, Alkalimetalsalze von Carbonsäuren oder aliphatische tertiäre Amine. Bevorzugt sind quaternäres Ammoniumhydroxid, Alkalimetalhydroxid oder Alkoxid, Natrium oder Kaliumacetat, Kaliumoctoat, Natriumbenzoat, 1,4-diazabicyclo[2.2.2]octan, N,N,N',N'-Tetramethylhexamethylendiamin, N,N,N',N'-Tetramethylpropylenediamin, N,N,N',N',N"-Pentamethyldiethylentriamin, N,N'-Di-(C1-C2)-alkylpiperazin, Trimethylaminoethylpiperazin, N,N-Dimethylcyclohexylamin, N,N-Dimethylbenzylamin, N-Methylmorpholin, N-Ethylmorpholin, Trimethyl- amin, Triethylamin, Tributylamin, Triethylenediamin, Bis(dimethylaminoalkyl)piperazine, N,N,N',N'-tetramethylethylendiamin, N,N-Diethylbenzylamin, Bis(N,N-diethylaminoethyl)adipat, N,N,N',N'-Tetramethyl-1,3-butanediamin, N,N-Diethyl-[beta]-phenylethylamin, 1,2-Dimethylimidazol, 2-Methylimidazol usw. (US-A-6878753).

Bevorzugt ist das Gewichtverhältnis des Polyisocyanats zu Polyol 170 zu 70, vorzugsweise 130 zu 80 bezogen auf 100 Gewicht-Teile des Polyols.

Bevorzugt ist das Gewichtverhältnis des Katalysators 0,1 bis 4 Gew.-Teile, besonders bevorzugt 1 bis 2 Gew.-Teile bezogen auf 100 Gew.-Teile des Polyols.

Bevorzugte Treibmittel sind Wasser, Kohlenwasserstoff, Fluorchlorkohlenwasserstoff, Fluorokohlenwasserstoff etc.

Die Menge des Blähmittel ist 0,1 bis 1,8 Gewichtsteile, vorzugsweise 0,3 bis 1,6 Gewichtsteileund insbesondere 0,8 bis 1,6 Gewichtsteile bezogen auf 100 Gewichtsteile des Polyols.

### Beispiel 1 (Verfahren 3)

Es werden 53,0 g Natriumhypophosphitmonohydrat mit 54,2 g Salzsäure (37 %) und 26,4 g Paraldehyd (Acetaldehyd-Trimer; entspr. 0,6 mol Monomer) versetzt. Die Mischung wird unter Rühren in einem Berghoff-Laborautoklav für 6 h auf 110°C erhitzt. Die erkaltete Reaktionsmischung wird mit weiteren 16,5 g Paraformaldehyd (Formaldehyd-Trimer; entspr. 0,55 mol Monomer) versetzt und weitere 0,5 h auf 154°C erhitzt. ³¹P-NMR-spektroskopisch wird ein Gehalt von 64 mol-% Formaldehyd-Acetaldehyd-Addukt bestimmt (chem. Versch. 46,7 ppm). Es werden weitere 0,05 mol NaOH-Lösung zugegeben und die Reaktionslösung zunächst zur Trockene eingedampft, dann in Ethanol aufgenommen und ausgefallenes Natriumchlorid entfernt. Nach dem Abdestillieren des Lösungsmittels bleibt Formaldehyd-Acetaldehyd-Addukt als Rohprodukt zurück.

### Herstellung von Hypophosphoriger Säure (98 %)

Handelsübliche Hypophosphorige Säure mit ca. 50 Gew.-% Aktivsubstanz wird mit Hilfe eines Rotationsverdampfers im Unterdruck aufkonzentriert und analytisch der P-Gehalt bestimmt.

### Beispiel 2 (Verfahren 4b)

Es werden 33,7 g Hypophosphorige Säure (98 %) mit 49,3 g Salzsäure (37 %) und 26,4 g Paraldehyd (Acetaldehyd-Trimer; entspr. 0,6 mol Monomer) versetzt. Die Mischung wird unter Rühren in einem Berghoff-Laborautoklav für 18 h auf 110°C erhitzt. Die erkaltete Reaktionsmischung wird mit weiteren 16,5 g Paraformaldehyd (Formaldehyd-Trimer; entspr. 0,5 mol Monomer) versetzt und weitere 18 h auf 154°C erhitzt. ³¹P-NMR-spektroskopisch wird ein Gehalt von 60 mol-% Formaldehyd-Acetaldehyd-Addukt bestimmt. Die Reaktionslösung wird zur Trockene eingedampft. Das Formaldehyd-Acetaldehyd-Addukt bleibt als Rohprodukt zurück.

Herstellung von Mono-Aceton-Addukt (1-Hydroxy-1-methylethylphosphinsäure) In einem Mehrhalsrundkolben mit Rührer, Intensivkühler und Tropftrichter werden unter Stickstoffatmosphäre 741,9 g (7,0 mol) Natriumhypophosphitmonohydrat vorgelegt und 1390 g (14,1 mol) Salzsäure langsam zugetropft. Danach werden 609 g (10,5 mol) Aceton zugegeben. Unter Rühren wird langsam erhitzt und 7 Stunden am Rückfluß gekocht. Die Reaktionsmischung wird abgekühlt und unter Rühren und Eiskühlung 672 g (8,4 mol) NaOH (50 Gew.-%) Natronlauge so zugetropft, dass die Temperatur bis max. 50°C steigt. Nach Abkühlen auf Raumtemperatur wird die Suspension über eine Nutsche abgesaugt und mit Aceton gewaschen. Von dem Filtrat wird das Lösungsmittel mit einem Rotationsverdampfer bei 70°C und 20 mbar abdestilliert. Der Rückstand wird mit 1000 g Ethanol versetzt, abermals Natriumchlorid abfiltriert und Lösungsmittel im Unterdruck abdestilliert Das erhaltene Produkt (933,2 g) ist ein leicht trübes, viskoses Wachs und enthält 87,6 mol-% Mono-Aceton-Addukt (³¹P-NMR; chem. Versch. 38,5 ppm)

### Beispiel 3 (Verfahren 5b)

Es werden 64 g Mono-Aceton-Addukt mit 24,6 g Salzsäure (37 %), 148 g demin. Wasser und 16,5 g Paraformaldehyd (Formaldehyd-Trimer; entspr. 0,55 mol Monomer) versetzt. Die Mischung wird unter Rühren in einem Berghoff-Laborautoklav für 1 h auf 110°C erhitzt. In der erkalteten Reaktionsmischung wird ³¹P-NMR-spektroskopisch ein Gehalt von 83 mol-% Aceton-Formaldehyd-Addukt bestimmt. Die Reaktionslösung wird zur Trockene eingedampft. Das Aceton-Formaldehyd-Addukt bleibt als Rohprodukt zurück.

### Beispiel 4 (Verfahren 5a)

Es werden 64 g Mono-Aceton-Addukt mit 148g demin. Wasser und 24,2 g Paraldehyd (Acetaldehyd-Trimer; entspr. 0,55 mol Monomer) versetzt. Die Mischung wird unter Rühren in einem Berghoff-Laborautoklav für 6 h auf 110°C erhitzt. In der erkalteten Reaktionsmischung wird ³¹P-NMR-spektroskopisch ein Gehalt von 77 mol-% Aceton-Acetaldehyd-Addukt bestimmt. Die Reaktionslösung wird zur Trockene eingedampft. Das Aceton-Acetaldehyd-Addukt bleibt als Rohprodukt zurück.

### Beispiel 5 (Verfahren 5a)

Es werden 64 g Mono-Aceton-Addukt mit 39,7 g Benzaldehyd versetzt. Die Mischung wird unter Rühren in einem Mehrhalsrundkolben für 6 h auf 110°C erhitzt. In der erkalteten Reaktionsmischung wird ³¹P-NMR-spektroskopisch ein Gehalt von 75 mol-% Aceton-Benzaldehyd-Addukt bestimmt.

### Beispiel 6 (Verfahren 3)

Es werden 53,0 g Natriumhypophosphitmonohydrat mit 98,5 g Salzsäure (37 %) und 98,2 g Cyclohexanon versetzt. Die Mischung wird unter Rühren in einem Berghoff-Laborautoklav für 8,5 h auf 108°C erhitzt. Die erkaltete Reaktionsmischung wird mit weiteren 16,5 g Paraformaldehyd (Formaldehyd-Trimer; entspr. 0,55 mol Monomer) versetzt und weitere 6 h auf 110°C erhitzt. ³¹P-NMR-spektroskopisch wird ein Gehalt von 68 mol-% Cyclohexanon-Formaldehyd-Addukt bestimmt. Es werden weitere 0,5 mol NaOH-Lösung zugegeben und die Reaktionslösung zunächst zur Trockene eingedampft, dann in Ethanol aufgenommen und ausgefallenes Natriumchlorid entfernt. Nach dem Abdestillieren des Lösungsmittels bleibt Cyclohexanon-Formaldehyd-Addukt als Rohprodukt zurück.

### Beispiel 7 (Verfahren 2)

Es werden 15,9 g Natriumhypophosphitmonohydrat mit 29,6 g Salzsäure (37 %) versetzt. Ausfallendes Natriumchlorid wird abfilriert. Die Mutterlauge wird mit 206 g Ethanol und 35,0g Benzaldehyd versetzt und unter Rühren in einem Berghoff-Laborautoklav für 6 h auf 82°C erhitzt. Die erkaltete Reaktionsmischung wird mit weiteren 5 g Paraformaldehyd (Formaldehyd-Trimer; entspr. 0,17 mol Monomer) versetzt und weitere 0,5 h auf 150°C erhitzt. ³¹P-NMR-spektroskopisch wird ein Gehalt von 63 mol-% Benzaldehyd -Formaldehyd-Addukt (chem Versch 41,8-44,5 ppm bestimmt. Die Reaktionslösung wird zur Trockene eingedampft und das Benzaldehyd -Formaldehyd-Addukt bleibt als Rohprodukt zurück.

### Herstellung von Mono-Benzaldehyd-Addukt

Es werden 159,0 g (1,5 mol) Natriumhypophosphitmonohydrat und 295,9 g (3,0 mol) Salzsäure (37 Gew.-%) gemischt und das entstehende NaCl über eine Fritte abgesaugt. Das Filtrat wird mit 2062g Ethanol und 350,0 g (3,3 mol) Benzaldehyd in einem 4-L-Mehrhalskolben vorgelegt. Unter Stickstoffatmosphäre wird 6h unter Rückfluß gekocht (82°C). Nach dem Abkühlen wird zunächst das Lösungsmittel mit einem Rotationsverdampfer bei 70°C und 20 mbar, dann überschüssiges Benzaldehyd durch Wasserdampfdestillation abdestilliert. Die wässrige Lösung wird filtriert und das Filtrat durch Destillation im Unterdruck von restlichem Lösungsmittel befreit. Das zurückbleibende leicht gelbliche Harz (261g) enthält 68 % Mono-Benzaldehyd-Addukt (chem Versch. 32,6ppm ¹J_{pH}=529Hz)

### Beispiel 8 (Verfahren 5c)

Es werden 63,3 g Mono-Benzaldehyd-Addukt mit 49,3 g Salzsäure (37 %) und 230 g Ethanol und 12,1 g Paraldehyd (Acetaldehyd-Trimer; entspr. 0,28 mol Monomer) versetzt. Die Mischung wird unter Rühren in einem Berghoff-Laborautoklav für 6 h auf 150°C erhitzt. ³¹P-NMR-spektroskopisch wird ein Gehalt von 65 mol-% Benzaldehyd-Acetaldehyd-Addukt bestimmt. Es werden weitere 0,5 mol NaOH-Lösung zugegeben und die Reaktionslösung zunächst zur Trockene eingedampft, dann in Ethanol aufgenommen und ausgefallenes Natriumchlorid entfernt. Nach dem Abdestillieren des Lösungsmittels bleibt Benzaldehyd-Acetaldehyd-Addukt als Rohprodukt zurück.

### Beispiel 9 (Verfahren 5a)

In einem Mehrhalsrundkolben werden 63,3 g Mono-Benzaldehyd-Addukt mit 230 g Ethanol und 19,3 g Methacrolein versetzt. Die Mischung wird für 3 h bei 78°C zum Rückfluß erhitzt. In der erkalteten Reaktionsmischung wird ³¹P-NMR-spektroskopisch ein Gehalt von 22,5 mol-% Benzaldehyd-Methacrolein-Addukt bestimmt. Die Reaktionslösung wird zur Trockene eingedampft.

### Beispiel 10 (Verfahren 2)

Es werden 53,0 g Natriumhypophosphitmonohydrat mit 54,2 g Salzsäure (37 %) versetzt. Ausfallendes Natriumchlorid wird abfiltriert. Das Filtrat wird in einem Mehrhalsrundkolben mit 72,1g Acetophenon versetzt und unter Rühren 8h bei 97°C am Rückfluss gekocht. In einem Berghoff-Laborautoklav wird die erkaltete Reaktionslösung mit 16,5g Paraformaldehyd (Formaldehyd-Trimer; entspr. 0,55 mol Monomer) für 8 h auf 110°C erhitzt. ³¹P-NMR-spektroskopisch wird ein Gehalt von 78 mol-% Acetophenon -Formaldehyd-Addukt bestimmt. Die Reaktionslösung wird zur Trockene eingedampft und das Acetophenon-Formaldehyd-Addukt bleibt als Rohprodukt zurück.

### Beispiel 11 (Verfahren 4a)

Es werden 16,8 g Hypophosphorige Säure (98 %) mit 68 g demin. Wasser und 182 g Benzophenon versetzt. Die Mischung wird unter Rühren in einem Berghoff-Laborautoklav für 6,5 h auf 110°C erhitzt. Die erkaltete Reaktionsmischung wird mit weiteren 8,3 g Paraformaldehyd (Formaldehyd-Trimer; entspr. 0,28 mol Monomer) versetzt und weitere 8 h auf 110°C erhitzt. ³¹P-NMR-spektroskopisch wird ein Gehalt von 44 mol-% Benzophenon-Formaldehyd-Addukt bestimmt. Die Reaktionslösung wird zur Trockene eingedampft. Das Benzophenon-Formaldehyd-Addukt bleibt als Rohprodukt zurück.

### Beispiel 12 (Verfahren 1)

Es werden 31,8 g Natriumhypophosphitmonohydrat mit 75 g demin Wasser und 0,9 mol Glyoxylsäure-Natriumsalz versetzt. Letzteres wurde durch Umsetzung von 0,9 mol Glyoxylsäurehydrat mit 0,9 mol NaOH-Lösung hergestellt. Die Mischung wird unter Rühren in einem Berghoff-Laborautoklav für 19 h auf 140°C erhitzt. Die erkaltete Reaktionsmischung wird mit weiteren 9,9 g Paraformaldehyd (Formaldehyd-Trimer; entspr. 0,33 mol Monomer) versetzt und weitere 8 h auf 110°C erhitzt. ³¹P-NMR-spektroskopisch wird ein Gehalt von 42 mol-% Glyoxylsäure-Formaldehyd-Addukt bestimmt. Es werden weitere 0,6 mol Schwefelsäure (98 %) zugegeben und die Reaktionslösung zunächst zur Trockene eingedampft, dann in Ethanol aufgenommen und ausgefallenes Natriumsulfathydrat entfernt. Nach dem Abdestillieren des Lösungsmittels bleibt Glyoxylsäure-Formaldehyd-Addukt als Rohprodukt zurück.

### Beispiel 13 (Verfahren 2)

Es werden 53,0 g Natriumhypophosphitmonohydrat mit 98,5 g Salzsäure (37 %) versetzt. Ausfallendes Natriumchlorid wird abfiltriert. Das Filtrat wird mit 58,1 g Lävulinsäure versetzt und die Mischung unter Rühren in einem Berghoff-Laborautoklav für 21 h auf 111°C erhitzt. Die erkaltete Reaktionslösung mit 16,5 g Paraformaldehyd (Formaldehyd-Trimer; entspr. 0,55 mol Monomer) versetzt und für 8 h auf 110°C erhitzt. ³¹P-NMR-spektroskopisch wird ein Gehalt von 68 mol-% Lävulinsäure-Formaldehyd-Addukt bestimmt. Die Reaktionslösung wird zur Trockene eingedampft und das Lävulinsäure-Formaldehyd-Addukt bleibt als Rohprodukt zurück.

### Beispiel 14 (Verfahren 5c)

Es werden 33,7 g Hypophosphorige Säure (98 %) mit 49,3 g Salzsäure (37 %) und 74,1 g Hydroxylaceton versetzt. Die Mischung wird unter Rühren in einem Berghoff-Laborautoklav für 3 h auf 110°C erhitzt. Die erkaltete Reaktionsmischung wird mit weiteren 16,5 g Paraformaldehyd (Formaldehyd-Trimer; entspr. 0,55 mol Monomer) versetzt und weitere 5 h auf 130°C erhitzt. ³¹P-NMR-spektroskopisch wird ein Gehalt von 72 mol-% Hydroxylaceton-Formaldehyd-Addukt bestimmt. Es werden weitere 0,5 mol NaOH-Lösung zugegeben und die Reaktionslösung zunächst zur Trockene eingedampft, dann in Ethanol aufgenommen und ausgefallenes Natriumchlorid entfernt. Nach dem Abdestillieren des Lösungsmittels bleibt Hydroxylaceton-Formaldehyd-Addukt als Rohprodukt zurück.

### Beispiel 15 (Verfahren 3)

Es werden 53,0 g Natriumhypophosphitmonohydrat mit 98,5 g Salzsäure (37 %), 109g demin Wasser und 67,6g 3'-Aminoacetophenon versetzt. Die Mischung wird unter Rühren in einem Berghoff-Laborautoklav für 14 h auf 110°C erhitzt. Die erkaltete Reaktionsmischung wird mit weiteren 16,5 g Paraformaldehyd (Formaldehyd-Trimer; entspr. 0,55 mol Monomer) versetzt und weitere 8 h auf 110°C erhitzt. ³¹P-NMR-spektroskopisch wird ein Gehalt von 61 mol-% 3'-Aminoacetophenon-Formaldehyd-Addukt bestimmt. Es wird NaOH-Lösung bis zum pH-Wert von 10,5 zugegeben, filtriert, das Filtrat zur Trockene eingedampft, dann in Ethanol aufgenommen und ausgefallenes Natriumchlorid entfernt. Nach dem Abdestillieren des Lösungsmittels bleibt 3'-Aminoacetophenon-Formaldehyd-Addukt als Rohprodukt zurück.

### Beispiel 16 (Verfahren 5b)

Es werden 64 g Mono-Aceton-Addukt mit 49,3 g Salzsäure (37 %) und 63,9g Lävulinsäure versetzt. Die Mischung wird unter Rühren in einem Berghoff-Laborautoklav für 8 h auf 110°C erhitzt. In der erkalteten Reaktionsmischung wird ³¹P-NMR-spektroskopisch ein Gehalt von 78 mol-% Aceton-Lävulinsäure-Addukt bestimmt. Die Reaktionslösung wird zur Trockene eingedampft.

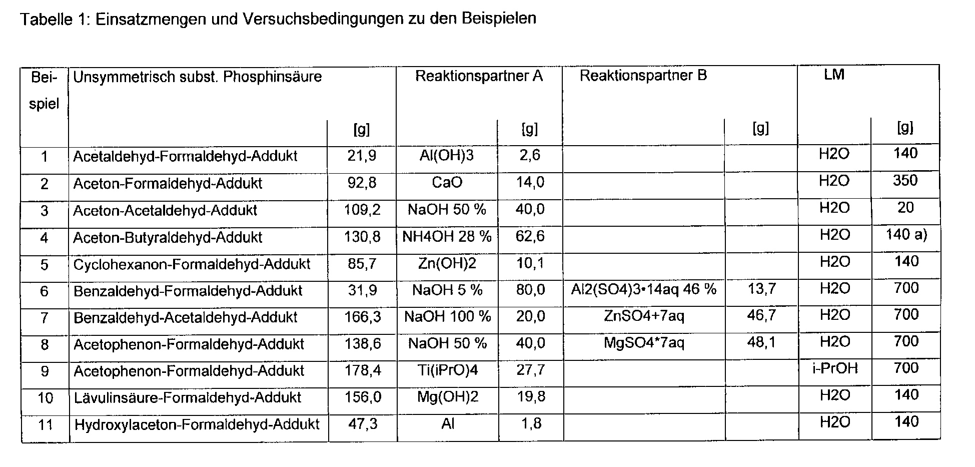

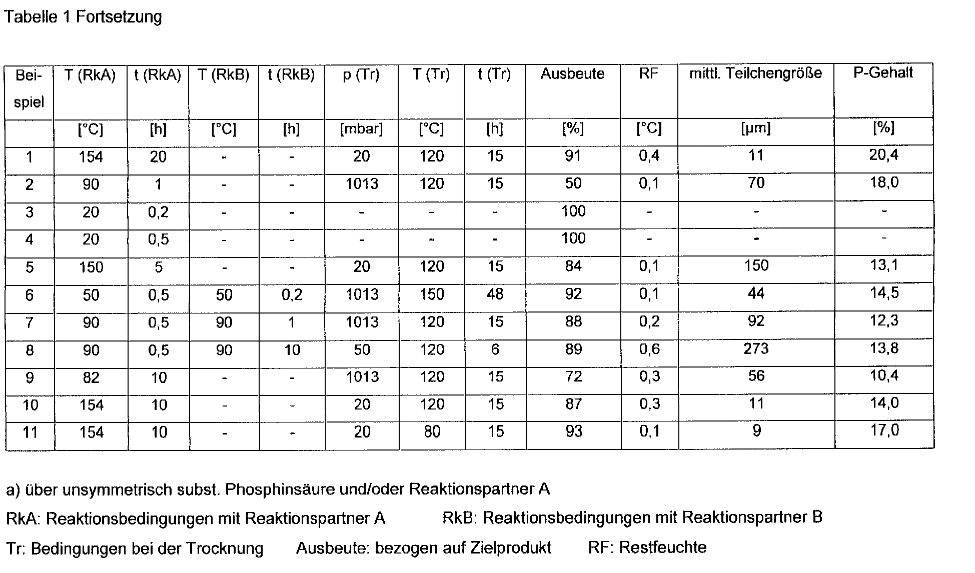

## Patentansprüche

1. Unsymmetrisch substituierte Phosphinsäuren der Formel (I)
R₁R₂C(OH)-P(=O)(OX)-C(OH)R₃R₄ (I)
worin
X Wasserstoff
R₁, R₂, R₃, R₄ gleich oder verschieden sind und Wasserstoff, Alkyl, Alkenyl, Alkinyl, Aralkyl, Aryl und/oderAlkaryl bedeuten,
mit der Maßgabe, dass die Gruppen R₁R₂C(OH)- und -C(OH)R₃R₄ jeweils immer verschieden sind.

2. Unsymmetrisch substituierte Phosphinsäuren nach Anspruch 1, **dadurch gekennzeichnet, dass** R₁, R₂, R₃, und/oder R₄ Heteroatome tragen und/oder mit einer funktionellen Gruppe substituiert sind.

3. Unsymmetrisch substituierte Phosphinsäuren nach Anspruch 1 oder 2, **dadurch gekennzeichnet, dass** es sich bei den funktionellen Gruppen um Carbonyl-, Aldehyd-, Carboxy-, Hydroxy-, Sulfonsäure-, Nitril-, Cyano- und/oder Epoxygruppen; um primäre, sekundäre und/oder tertiäre Aminogruppen und/oder um un-, teil- oder vollsubstituierte Triazine handelt.

4. Unsymmetrisch substituierte Phosphinsäuren nach einem oder mehreren der Ansprüche 1 oder 3, **dadurch gekennzeichnet, dass** es sich bei den Alkylgruppen um Methyl, Ethyl, n-Propyl, i-Propyl, n-Butyl, sec.-Butyl, tert.-Butyl, n-Octyl und/oder um Ethylhexyl handelt.

5. Unsymmetrisch substituierte Phosphinsäuren nach einem oder mehreren der Ansprüche 1 oder 3, **dadurch gekennzeichnet, dass** es sich bei den Carboxygruppen um Carboxyalkylgruppen des Typs (CH₂)ₙCO₂H mit n = 1 bis 6 handelt.

6. Unsymmetrisch substituierte Phosphinsäuren nach einem oder mehreren der Ansprüche 1 oder 3, **dadurch gekennzeichnet, dass** es sich bei den Hydroxygruppen um Hydroxyalkylgruppen des Typs (CH₂)ₙOH mit n = 1 bis 6 handelt.

7. Verfahren zur Herstellung von unsymmetrisch substituierte Phosphinsäuren, **dadurch gekennzeichnet, dass** eine Phosphorquelle gleichzeitig oder nacheinander mit einem Reaktionspartner A und einem Reaktionspartner B zu einem Additionsprodukt umgesetzt wird.

8. Verfahren nach Anspruch 7, **dadurch gekennzeichnet, dass** es sich bei der Phosphorquelle um ein Salz der Hypophosphorige Säure, um Hypophosphorige Säure, um Ester der Hypophosphorigen Säure oder um Mischungen davon handelt.

9. Verfahren nach Anspruch 7 oder 8, **dadurch gekennzeichnet, dass** es sich bei dem Salz der Hypophosphorige Säure um Alkalihypophosphit, Erdalkalihypophosphit, ein Hypophosphit der Elemente der dritten Hauptgruppe, Ammoniumhypophosphit, primäres, sekundäres, tertiäres, quarternäres Alkyl-, Aryl-Ammoniumhypophosphit, Triethylammoniumhypophosphit, Trimethylsilylammoniumhypophosphit und/oder N-Ethylpiperidinhypophosphit handelt.

10. Verfahren nach einem oder mehreren der Ansprüche 7 bis 9, **dadurch gekennzeichnet, dass** es sich bei dem Reaktionspartner A um ein Keton des Typs R₁R₂C=O oder ein Aldehyd des Typs R₁CHO und/oder des Typs R₂CHO handelt und es sich bei dem Reaktionspartner B um ein Keton des Typs R₃R₄C=O oder ein Aldehyd des Typs R₃CHO und/oder des Typs R₄CHO handelt.

11. Verfahren nach einem oder mehreren der Ansprüche 7 bis 10, **dadurch gekennzeichnet, dass** das mol-Verhältnis von Reaktionspartner A bzw. Reaktionspartner B jeweils zur Phosphorquelle 0,5 zu 1 bis 10 zu 1, bevorzugt 1 zu 1 bis 5 zu 1 ist.

12. Verwendung von unsymmetrisch substituierte Phosphinsäuren nach einem oder mehreren der Ansprüche 1 bis 6 als Flammschutzmittel, insbesondere in Klarlacken und Intumeszenzbeschichtungen, Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern zum flammhemmend Ausrüsten von Polyester und Cellulose-Rein- und Mischgeweben durch Impregnierung.

13. Flammgeschützte thermoplastische Polymerformmasse enthaltend
0,5 bis 45 Gew.-% unsymmetrisch substituierte Phosphinsäuren nach mindestens einem der Ansprüche 1 bis 6 und
0,5 bis 99,5 Gew.-% thermoplastisches Polymer oder Mischungen derselben, wobei die Summe der Komponenten 100 Gew.-% beträgt.

14. Flammgeschützte duroplastische Masse, enthaltend
0,1 bis 45 Gew.-% unsymmetrisch substituierte Phosphinsäuren nach mindestens einem der Ansprüche 1 bis 6,
40 bis 89,9 Gew.-% ungesättigte Polyester,
10 bis 60 Gew.-% Vinylmonomer.

15. Flammwidrig ausgerüstetes Epoxidharz, enthaltend
0,5 bis 50 Gew.-% unsymmetrisch substituierte Phosphinsäuren nach mindestens einem der Ansprüche 1 bis 6,
5 bis 99,5 Gew.-% eines Epoxidharzes,
0 bis 20 Gew.-% eines Härters.
